(19) Europäisches Patentamt
European Patent Office
Office européen des brevets

(11) EP 3 778 751 B1

(12) **EUROPEAN PATENT SPECIFICATION**

(45) Date of publication and mention of the grant of the patent:
**03.05.2023 Bulletin 2023/18**

(21) Application number: **19780737.3**

(22) Date of filing: **04.03.2019**

(51) International Patent Classification (IPC):
***C08L 15/00*** *(2006.01)* ***B60C 1/00*** *(2006.01)*
***C08K 3/013*** *(2018.01)* ***C08K 3/04*** *(2006.01)*
***C08K 3/36*** *(2006.01)* ***C08K 5/54*** *(2006.01)*
***C08L 9/00*** *(2006.01)* ***C08L 9/06*** *(2006.01)*
***C08L 71/00*** *(2006.01)*

(52) Cooperative Patent Classification (CPC):
(C-Sets available)
**B60C 1/0016; B60C 1/00; C08C 19/25; C08C 19/42; C08L 9/00; C08L 15/00;**
C08G 65/326; C08K 2201/006; C08L 9/06 (Cont.)

(86) International application number:
**PCT/JP2019/008263**

(87) International publication number:
**WO 2019/193888 (10.10.2019 Gazette 2019/41)**

(54) **RUBBER COMPOSITION FOR TIRE, AND PNEUMATIC TIRE**

KAUTSCHUKZUSAMMENSETZUNG FÜR REIFEN SOWIE LUFTREIFEN

COMPOSITION DE CAOUTCHOUC POUR PNEUMATIQUE, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**02.04.2018 JP 2018070910**
**02.04.2018 JP 2018070911**
**02.04.2018 JP 2018070912**
**02.04.2018 JP 2018070913**
**02.04.2018 JP 2018070914**

(43) Date of publication of application:
**17.02.2021 Bulletin 2021/07**

(73) Proprietor: **Sumitomo Rubber Industries, Ltd.**
**Kobe-shi, Hyogo 651-0072 (JP)**

(72) Inventors:
- **KITAOU, Ayaka**
**Kobe-shi, Hyogo 651-0072 (JP)**
- **TOMISAKI, Yukari**
**Kobe-shi, Hyogo 651-0072 (JP)**
- **MIKI, Naoyuki**
**Kobe-shi, Hyogo 651-0072 (JP)**
- **NAKAHATA, Shoko**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 623 416**
**EP-A2- 3 015 283**
**JP-A- 2010 209 256**
**JP-A- 2015 117 268**
**JP-A- 2016 044 201**
**JP-A- 2016 151 017**
**JP-A- 2018 188 567**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 778 751 B1

(52) Cooperative Patent Classification (CPC): (Cont.)

C-Sets
C08L 9/06, C08L 71/02, C08K 3/36

## Description

TECHNICAL FIELD

The present invention relates to rubber compositions for tires and pneumatic tires.

BACKGROUND ART

To meet the existing demand for tires having good fuel economy, silica has been used as filler.
For example, Patent Literature 1 discloses that silica may be incorporated to improve fuel economy, but this technique still leaves room for improvement. Moreover, development of other techniques is awaited.

CITATION LIST

PATENT LITERATURE

Patent Literature 1: JP 2007-177221 A

SUMMARY OF INVENTION

TECHNICAL PROBLEM

As a result of extensive studies, the present inventors revealed that the conventional techniques leave room for improvement in terms of silica dispersion and fuel economy, especially when the silica used is a fine particle silica having a large nitrogen adsorption specific surface area.
Then, the present invention aims to provide rubber compositions with good silica dispersion and fuel economy, and pneumatic tires including the rubber compositions.

SOLUTION TO PROBLEM

The first aspect of the present invention relates to a rubber composition for tires, containing:

a rubber component including 30% by mass or more of a styrene-butadiene rubber having a SiOR group wherein R represents a hydrogen atom or a hydrocarbon group;
a silica having a nitrogen adsorption specific surface area of 210 $m^2/g$ or more in an amount of 50 parts by mass or more per 100 parts by mass of the rubber component; and
at least one surfactant selected from the group consisting of polyoxyalkylene alkenyl ether sulfate salts and polyoxyalkylene alkyl ether sulfate salts.

Preferably, a ratio X/Y of an amount X (parts by mass) of the surfactant to an amount Y (parts by mass) of a silane coupling agent is 0.05 to 20.
Preferably, a ratio Z/(X+Y) of an amount Z (parts by mass) of the silica to an amount X (parts by mass) of the surfactant and an amount Y (parts by mass) of a silane coupling agent is 3 to 30.
Preferably, the surfactant is a polyoxyalkylene alkenyl ether sulfate salt.
The first aspect of the present invention also relates to a pneumatic tire, including a tire component formed from the rubber composition.
The second aspect of the present invention relates to a rubber composition for tires, containing:

a rubber component including 30% by mass or more of a styrene-butadiene rubber having a SiOR group wherein R represents a hydrogen atom or a hydrocarbon group, and having a total styrene-butadiene rubber content of 70 to 90% by mass and a polybutadiene rubber content of 10 to 30% by mass, each based on 100% by mass of the rubber component;
a silica having a nitrogen adsorption specific surface area of 210 $m^2/g$ or more in an amount of 50 parts by mass or more per 100 parts by mass of the rubber component; and
at least one surfactant selected from the group consisting of polyoxyalkylene alkenyl ether sulfate salts and polyoxyalkylene alkyl ether sulfate salts.

Preferably, a ratio X/Y of an amount X (parts by mass) of the surfactant to an amount Y (parts by mass) of a

silane coupling agent is 0.05 to 20.

Preferably, a ratio Z/(X+Y) of an amount Z (parts by mass) of the silica to an amount X (parts by mass) of the surfactant and an amount Y (parts by mass) of a silane coupling agent is 3 to 30.

Preferably, the surfactant is a polyoxyalkylene alkenyl ether sulfate salt.

The second aspect of the present invention also relates to a pneumatic tire, including a tire component formed from the rubber composition.

The third aspect of the present invention relates to a rubber composition for tires, containing:

a rubber component including 30% by mass or more of a styrene-butadiene rubber having a SiOR group wherein R represents a hydrogen atom or a hydrocarbon group;
a silica having a nitrogen adsorption specific surface area of 210 $m^2/g$ or more in an amount of 70 to 130 parts by mass per 100 parts by mass of the rubber component; and
at least one surfactant selected from the group consisting of polyoxyalkylene alkenyl ether sulfate salts and polyoxyalkylene alkyl ether sulfate salts.

Preferably, a ratio X/Y of an amount X (parts by mass) of the surfactant to an amount Y (parts by mass) of a silane coupling agent is 0.05 to 20.

Preferably, a ratio Z/(X+Y) of an amount Z (parts by mass) of the silica to an amount X (parts by mass) of the surfactant and an amount Y (parts by mass) of a silane coupling agent is 3 to 30.

Preferably, the surfactant is a polyoxyalkylene alkenyl ether sulfate salt.

The third aspect of the present invention also relates to a pneumatic tire, including a tire component formed from the rubber composition.

The fourth aspect of the present invention relates to a rubber composition for tires, containing:

a rubber component including 30% by mass or more of a styrene-butadiene rubber having a SiOR group wherein R represents a hydrogen atom or a hydrocarbon group;
a silica having a nitrogen adsorption specific surface area of 210 $m^2/g$ or more in an amount of 50 parts by mass or more per 100 parts by mass of the rubber component; and
at least one surfactant selected from the group consisting of polyoxyalkylene alkenyl ether sulfate salts and polyoxyalkylene alkyl ether sulfate salts,
the silica and the surfactant being simultaneously kneaded with the rubber.

Preferably, a ratio X/Y of an amount X (parts by mass) of the surfactant to an amount Y (parts by mass) of a silane coupling agent is 0.05 to 20.

Preferably, a ratio Z/(X+Y) of an amount Z (parts by mass) of the silica to an amount X (parts by mass) of the surfactant and an amount Y (parts by mass) of a silane coupling agent is 3 to 30.

Preferably, the surfactant is a polyoxyalkylene alkenyl ether sulfate salt.

The fourth aspect of the present invention also relates to a pneumatic tire, including a tire component formed from the rubber composition.

The fifth aspect of the present invention relates to a rubber composition for tires, containing:

a rubber component including 30% by mass or more of a styrene-butadiene rubber having a SiOR group wherein R represents a hydrogen atom or a hydrocarbon group;
a silica having a nitrogen adsorption specific surface area of 210 $m^2/g$ or more in an amount of 50 parts by mass or more per 100 parts by mass of the rubber component;
a carbon black in an amount of 2 parts by mass or more per 100 parts by mass of the rubber component; and
at least one surfactant selected from the group consisting of polyoxyalkylene alkenyl ether sulfate salts and polyoxyalkylene alkyl ether sulfate salts.

Preferably, a ratio X/Y of an amount X (parts by mass) of the surfactant to an amount Y (parts by mass) of a silane coupling agent is 0.05 to 20.

Preferably, a ratio Z/(X+Y) of an amount Z (parts by mass) of the silica to an amount X (parts by mass) of the surfactant and an amount Y (parts by mass) of a silane coupling agent is 3 to 30.

Preferably, a ratio A/Z of an amount A (parts by mass) of the carbon black to an amount Z (parts by mass) of the silica is 0.01 to 120.

Preferably, the surfactant is a polyoxyalkylene alkenyl ether sulfate salt.

The fifth aspect of the present invention also relates to a pneumatic tire, including a tire component formed from the rubber composition.

ADVANTAGEOUS EFFECTS OF INVENTION

The first aspect of the present invention provides a rubber composition for tires, containing: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts. Such a rubber composition has good silica dispersion and fuel economy.

The second aspect of the present invention provides a rubber composition for tires, containing: a rubber component including 30% by mass or more of a styrene-butadiene rubber having a SiOR group wherein R represents a hydrogen atom or a hydrocarbon group, and having a total styrene-butadiene rubber content of 70 to 90% by mass and a polybutadiene rubber content of 10 to 30% by mass, each based on 100% by mass of the rubber component; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts. Such a rubber composition has good silica dispersion and fuel economy.

The third aspect of the present invention provides a rubber composition for tires, containing: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 70 to 130 parts by mass per 100 parts by mass of the rubber component; and at least one surfactant selected from the group consisting of polyoxyalkylene alkenyl ether sulfate salts and polyoxyalkylene alkyl ether sulfate salts. Such a rubber composition has good silica dispersion and fuel economy.

The fourth aspect of the present invention provides a rubber composition for tires, containing: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts, wherein the silica and the surfactant are simultaneously kneaded with the rubber. Such a rubber composition has good silica dispersion and fuel economy.

The fifth aspect of the present invention provides a rubber composition for tires, containing: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; a carbon black in an amount of 2 parts by mass or more per 100 parts by mass of the rubber component; and at least one surfactant selected from the group consisting of polyoxyalkylene alkenyl ether sulfate salts and polyoxyalkylene alkyl ether sulfate salts. Such a rubber composition has good silica dispersion and fuel economy.

DESCRIPTION OF EMBODIMENTS

(First aspect of present invention)

The rubber composition for tires of the first aspect of the present invention contains: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts.

The reason why such a rubber composition provides good silica dispersion and fuel economy is not exactly clear, but may be explained as follows.

The SiOR group in a styrene-butadiene rubber having a SiOR group (referred to as "modified SBR") may interact with the hydroxyl groups on the surface of silica. Thus, the modified SBR can reduce aggregation of silica particles to improve silica dispersion. Moreover, the above-mentioned surfactant may adsorb suitably onto the hydrophilic silica surface due to the presence of a polyoxyalkylene portion and a sulfate portion, and make the silica surface hydrophobic with the alkenyl or alkyl group at the molecular end. Thus, the surfactant can reduce aggregation of silica particles to improve silica dispersion, and can also prevent adsorption of vulcanization accelerators to silica. Moreover, a combination of the modified SBR and the surfactant can provide a synergistic improvement of silica dispersion, so that better silica dispersion and fuel economy can be obtained than with the conventional techniques. This is believed to be because the presence of the surfactant improves the affinity between the silica and the modified SBR. Moreover, this effect is particularly pronounced when the rubber composition contains a relatively large amount of fine particle silica (a silica

having a nitrogen adsorption specific surface area of 210 $m^2/g$ or more in an amount of 50 parts by mass or more per 100 parts by mass of the rubber component). This is believed to be because, although fine particle silica can easily aggregate due to its strong aggregation ability, the combination of the modified SBR and the surfactant can provide a greater synergistic improvement of dispersion of the fine particle silica, so that the dispersion-improving effect can be more pronounced.

Probably for this reason, the present invention provides a rubber composition with good silica dispersion and fuel economy, even though it contains a relatively a large amount of fine particle silica (a silica having a nitrogen adsorption specific surface area of 210 $m^2/g$ or more in an amount of 50 parts by mass or more per 100 parts by mass of the rubber component).

In addition to good silica dispersion and fuel economy, the present invention also provides good processability, abrasion resistance, and grip performance.

Furthermore, the combined use of the styrene-butadiene rubber having a SiOR group wherein R represents a hydrogen atom or a hydrocarbon group, with the surfactant can synergistically improve silica dispersion and fuel economy.

The rubber composition contains a rubber component including a styrene-butadiene rubber having a SiOR group wherein R represents a hydrogen atom or a hydrocarbon group (modified SBR).

The modified SBR may be any SBR having a SiOR group. For example, it may be a chain end-modified SBR obtained by modifying at least one chain end of SBR with a compound (modifier) having a SiOR group (i.e., a chain end-modified SBR terminated with a SiOR group); a backbone-modified SBR having a SiOR group in the backbone; or a backbone- and chain end-modified SBR having a SiOR group in both the backbone and chain end (e.g., a backbone- and chain end-modified SBR in which the backbone has a SiOR group, and at least one chain end is modified with the modifier). The modified SBR may also be coupled with a polyfunctional compound such as a tin compound. These modified SBRs may be used alone or in combinations of two or more.

The hydrocarbon group for R may be linear, branched, or cyclic, and may be an aliphatic hydrocarbon group, an alicyclic hydrocarbon group, an aromatic hydrocarbon group, or a combination thereof. Among these, it is preferably an aliphatic hydrocarbon group. It is also preferably linear. To better achieve the advantageous effects, the hydrocarbon group has a carbon number that is preferably one or more, but is preferably 20 or less, more preferably 12 or less, still more preferably 6 or less, particularly preferably 3 or less.

The aliphatic hydrocarbon group has a carbon number that is preferably one or more, but is preferably 20 or less, more preferably 12 or less, still more preferably 6 or less, particularly preferably 3 or less. Preferred examples of such groups include alkyl groups having the above-mentioned carbon number ranges. Specific examples include methyl, ethyl, n-propyl, isopropyl, n-butyl, isobutyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. To better achieve the advantageous effects, methyl, ethyl, n-propyl, and isopropyl groups are preferred among these, with methyl and/or ethyl groups being more preferred.

Examples of the alicyclic hydrocarbon group include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

Examples of the aromatic hydrocarbon group include phenyl, benzyl, phenethyl, tolyl, xylyl, and naphthyl groups. The tolyl or xylyl group may have methyl substituent(s) at any of the ortho, meta, and para positions of the benzene ring.

To better achieve the advantageous effects, R is preferably a hydrogen atom or an aliphatic hydrocarbon group having the above-mentioned carbon number range, more preferably a hydrogen atom or an alkyl group having the above-mentioned carbon number range.

The SiOR group is usually represented by the formula (A) :

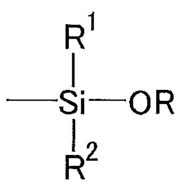

(A)

wherein $R^1$ and $R^2$ are the same as or different from each other and each represent a hydrogen atom, a hydrocarbon group, or an OR group wherein R represents a hydrogen atom or a hydrocarbon group.

Example of the hydrocarbon group for $R^1$ or $R^2$ include those described for R, and suitable embodiments thereof are the same as above. Example of the OR group include those described for the SiOR group (the OR group in the SiOR group), and suitable embodiments thereof are the same as above.

To more suitably achieve the advantageous effects, $R^1$ and $R^2$ are preferably both OR groups. In other words, the SiOR group is preferably a $Si(OR)_3$ group.

The modified SBR may have other functional groups in addition to the SiOR group.

Examples of such functional groups include amino, amide, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. To more suitably achieve the advantageous effects, preferred among these are amino groups (preferably amino groups whose hydrogen atom is replaced with a C1-C6 alkyl group) and alkoxy groups (preferably C1-C6 alkoxy groups).

The modified SBR may be an emulsion polymerized styrene-butadiene rubber (E-SBR) or a solution polymerized styrene-butadiene rubber (S-SBR). These rubbers may be used alone or in combinations of two or more.

The modified SBR preferably has a weight average molecular weight (Mw) of 200,000 or more, more preferably 300,000 or more, still more preferably 500,000 or more. The upper limit of the Mw is not limited, but it is preferably 2,000,000 or less, more preferably 1,500,000 or less, still more preferably 1,000,000 or less. When the Mw is within the range indicated above, the advantageous effects tend to be well achieved.

Herein, the weight average molecular weight (Mw) of the rubber component can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The modified SBR preferably has a styrene content of 10% by mass or higher, more preferably 15% by mass or higher, still more preferably 20% by mass or higher, but preferably 50% by mass or lower, more preferably 40% by mass or lower, still more preferably 30% by mass or lower, particularly preferably 25% by mass or lower. When the styrene content is within the range indicated above, the advantageous effects tend to be well achieved.

Herein, the styrene content of the SBR is determined by $H^1$-NMR analysis.

The modified SBR preferably has a vinyl content of 5% by mass or higher, more preferably 10% by mass or higher, still more preferably 20% by mass or higher, particularly preferably 30% by mass or higher, most preferably 40% by mass or higher, but preferably 70% by mass or lower, more preferably 60% by mass or lower. When the vinyl content is within the range indicated above, the advantageous effects tend to be well achieved.

Herein, the vinyl content (1,2-butadiene unit content) can be measured by infrared absorption spectrometry.

The modified SBR may be a SBR product manufactured or sold by, for example, Sumitomo Chemical Co., Ltd., JSR Corporation, Asahi Kasei Corporation, Zeon Corporation, or Dow.

The amount of the modified SBR based on 100% by mass of the rubber component is 30% by mass or more, preferably 50% by mass or more, more preferably 60% by mass or more. The upper limit may be 100% by mass, but when the rubber component includes any other rubber, it is preferably 90% by mass or less, more preferably 80% by mass or less. When the amount is within the range indicated above, the advantageous effects tend to be well achieved.

Examples of materials other than the modified SBR that may be used in the rubber component of the rubber composition include SBR other than the modified SBR, and diene rubbers such as polybutadiene rubbers (BR), isoprene-based rubbers, acrylonitrile-butadiene rubbers (NBR), chloroprene rubbers (CR), butyl rubbers (IIR), and styreneisoprene-butadiene copolymer rubbers (SIBR). These may be used alone or in combinations of two or more.

The SBR (second SBR) other than the modified SBR is preferably an unmodified SBR having no functional group.

The preferred weight average molecular weight (Mw), styrene content, and vinyl content of the second SBR are as described for the modified SBR.

The second SBR may be a SBR product manufactured or sold by, for example, Sumitomo Chemical Co., Ltd., JSR Corporation, Asahi Kasei Corporation, Zeon Corporation, or Dow.

The total SBR content (the combined amount of the modified SBR and the second SBR) based on 100% by mass of the rubber component is preferably 30% by mass or more, more preferably 50% by mass or more, still more preferably 70% by mass or more. The upper limit may be 100% by mass, but when the rubber component includes any rubber other than SBR, it is preferably 90% by mass or less, more preferably 80% by mass or less. When the total SBR content is within the range indicated above, the advantageous effects tend to be well achieved.

Non-limiting examples of the BR include high-cis BR, BR containing syndiotactic polybutadiene crystals, and polybutadiene rubbers synthesized using rare earth catalysts (rare earth-catalyzed BR). These may be used alone or in combinations of two or more. High-cis BR is preferred among these.

The BR may be an unmodified BR or a modified BR. These may be used alone or in combinations of two or more.

Examples of the modified BR include those into which the functional groups listed for the modified SBR have been introduced.

The BR preferably has a cis content of 90% by mass or more, more preferably 93% by mass or more, still more preferably 95% by mass or more. When the cis content is not less than the lower limit, good abrasion resistance tends to be obtained.

Herein, the cis content of the rubber component can be measured by infrared absorption spectrometry.

The BR may be a commercial product of, for example, Ube Industries, Ltd., JSR Corporation, Asahi Kasei Corporation, Zeon Corporation, or Lanxess.

The amount of the BR based on 100% by mass of the rubber component is preferably 5% by mass or more, more preferably 10% by mass or more, but is preferably 50% by mass or less, more preferably 40% by mass or less,

still more preferably 30% by mass or less. When the amount is within the range indicated above, the advantageous effects tend to be well achieved.

The combined amount of the SBR (the modified SBR and the second SBR) and the BR based on 100% by mass of the rubber component is preferably 60% by mass or more, more preferably 80% by mass or more, still more preferably 90% by mass or more, and may be 100% by mass. When the combined amount is within the range indicated above, the advantageous effects tend to be well achieved.

Examples of the isoprene-based rubbers include natural rubbers (NR), polyisoprene rubbers (IR), refined NR, modified NR, and modified IR. Examples of the NR include those usually used in the tire industry such as SIR20, RSS#3, and TSR20. Non-limiting examples of the IR include those usually used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more. The amount of the isoprene-based rubbers based on 100% by mass of the rubber component may be any amount that does not impair the advantageous effects. The amount is preferably 5% by mass or more but is preferably 20% by mass or less.

The rubber composition contains a silica having a nitrogen adsorption specific surface area of 210 $m^2/g$ or more in an amount of 50 parts by mass or more per 100 parts by mass of the rubber component.

Examples of the silica include dry silica (silicic acid anhydride) and wet silica (hydrous silicic acid). Wet silica is preferred because it has a large number of silanol groups. These may be used alone or in combinations of two or more.

The silica preferably has a nitrogen adsorption specific surface area ($N_2SA$) of 220 $m^2/g$ or more, more preferably 230 $m^2/g$ or more, still more preferably 240 $m^2/g$ or more. The $N_2SA$ is also preferably 300 $m^2/g$ or less, more preferably 270 $m^2/g$ or less. When the $N_2SA$ is within the range indicated above, the advantageous effects tend to be well achieved.

The nitrogen adsorption specific surface area of the silica is measured by the BET method in accordance with ASTM D3037-81.

The silica may be a commercial product of, for example, Degussa, Rhodia, Tosoh Silica Corporation, Solvay Japan, or Tokuyama Corporation.

The amount of the silica per 100 parts by mass of the rubber component is 50 parts by mass or more, preferably 60 parts by mass or more, more preferably 70 parts by mass or more, but is preferably 150 parts by mass or less, more preferably 130 parts by mass or less, still more preferably 120 parts by mass or less, particularly preferably 100 parts by mass or less. When the amount is within the range indicated above, the advantageous effects tend to be well achieved.

In addition to the above-mentioned silica, the rubber composition may contain any silica other than that silica (second silica). In this case, the total silica content may be the same as when using the silica alone.

The rubber composition contains at least one surfactant selected from the group consisting of polyoxyalkylene alkenyl ether sulfate salts and polyoxyalkylene alkyl ether sulfate salts. These may be used alone or in combinations of two or more.

The surfactant preferably has an ethylene oxide structure and/or a propylene oxide structure. A surfactant having an ethylene oxide structure and/or a propylene oxide structure as a hydrophilic group provides a higher affinity with silica, so that the advantageous effects can be more suitably achieved. Among these structures, the surfactant preferably has an ethylene oxide structure. In the case of a surfactant having an ethylene oxide structure and/or a propylene oxide structure, the average number of moles of ethylene oxide (EO) and propylene oxide (PO) added (the sum of the average numbers of moles of EO and PO added) is preferably 10 or more, more preferably 13 or more, but is preferably 80 or less, more preferably 60 or less, still more preferably 40 or less. In this case, the surfactant has a much higher affinity with silica, so that the advantageous effects can be more suitably achieved.

Moreover, the alkenyl groups of the polyoxyalkylene alkenyl ether sulfate salts and the alkyl groups of the polyoxyalkylene alkyl ether sulfate salts each have a carbon number that is preferably 8 or more, more preferably 10 or more, but is preferably 20 or less, more preferably 18 or less, still more preferably 15 or less. In such cases, silica dispersion can be further enhanced, so that the advantageous effects can be more suitably achieved.

Non-limiting examples of the surfactant in the salt form include salts of alkali metals such as potassium and sodium, salts of alkaline earth metals such as magnesium and calcium, salts of amines such as monoethanolamine, diethanolamine, and triethanolamine, and ammonium salts. To more suitably achieve the advantageous effects, alkali metal salts or ammonium salts are preferred among these, with sodium or ammonium salts being more preferred.

The surfactant preferably has a HLB value (determined by the Griffin's method) of 12 or more, more preferably 13 or more, but preferably 19 or less, more preferably 17 or less. When the HLB value is within the range indicated above, the advantageous effects tend to be well achieved.

Polyoxyalkylene alkenyl ether sulfate salts are preferred among the polyoxyalkylene alkenyl ether sulfate salts and polyoxyalkylene alkyl ether sulfate salts.

Preferred polyoxyalkylene alkenyl ether sulfate salts are polyoxyethylene alkenyl ether sulfate salts. More preferred are ammonium polyoxyethylene alkenyl ether sulfates.

Preferred polyoxyalkylene alkyl ether sulfate salts are polyoxyethylene alkyl ether sulfate salts. More preferred are sodium polyoxyethylene alkyl ether sulfates.

The surfactant may be a commercial product of, for example, Kao Corporation, Lion Corporation, or Lion Specialty Chemicals Co., Ltd.

The amount of the surfactant per 100 parts by mass of the rubber component is preferably 0.5 parts by mass or more, more preferably 1 part by mass or more, still more preferably 2 parts by mass or more, but is preferably 30 parts by mass or less, more preferably 20 parts by mass or less, still more preferably 10 parts by mass or less. When the amount is within the range indicated above, the advantageous effects tend to be well achieved.

The rubber composition may contain, together with the above-mentioned surfactant, any surfactant other than that surfactant (second surfactant). In this case, the total surfactant content may be the same as when using the surfactant alone.

The rubber composition preferably further contains a silane coupling agent.

Non-limiting examples of the silane coupling agent include sulfide silane coupling agents such as bis(3-triethoxysilylpropyldisulfide), bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. Preferred among these are sulfide silane coupling agents and mercapto silane coupling agents, with mercapto silane coupling agents being more preferred, because then the advantageous effects tend to be well achieved.

Herein, the term "mercapto silane coupling agent" is not limited to silane coupling agents having a mercapto group (-SH) and conceptually includes silane coupling agents having mercapto derivative groups (for example, a carbonylthio group (-S-C(=O)-)). The term "mercapto derivative group" is not limited to groups derived directly from a mercapto group (-SH) by synthesis reaction and conceptually includes groups in which the hydrogen atom of a mercapto group (-SH) is replaced by a different atom or group.

The mercapto silane coupling agent is preferably a silane coupling agent having a mercapto group (-SH), more preferably a compound represented by the following formula (1) and/or a compound containing linking units A and B represented by the following formulas (2) and (3), respectively, still more preferably a compound containing linking units A and B of formulas (2) and (3). With such a mercapto silane coupling agent, the advantageous effects can be more suitably achieved.

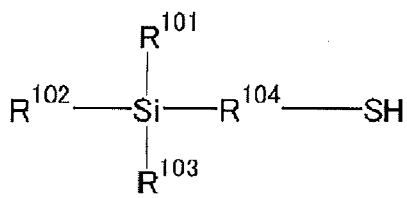

(1)

In formula (1), $R^{101}$ to $R^{103}$ each represent a branched or unbranched C1 to C12 alkyl group, a branched or unbranched C1 to C12 alkoxy group, or a group represented by $-O-(R^{111}-O)_z-R^{112}$ where $R^{111}$, the number of which is z, represents a branched or unbranched C1 to C30 divalent hydrocarbon group, and each $R^{111}$ may be the same or different; $R^{112}$ represents a branched or unbranched C1 to C30 alkyl group, a branched or unbranched C2 to C30 alkenyl group, a C6 to C30 aryl group, or a C7 to C30 aralkyl group; z represents an integer of 1 to 30, and $R^{101}$ to $R^{103}$ may be the same as or different from one another; and $R^{104}$ represents a branched or unbranched C1 to C6 alkylene group.

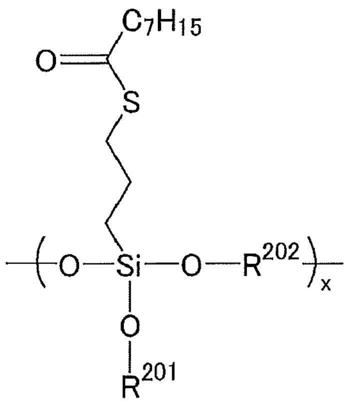

(2)

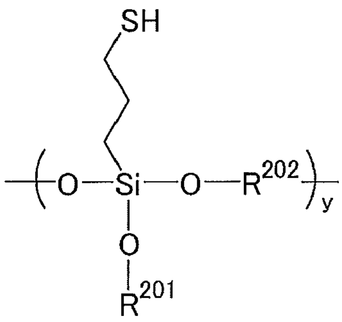

(3)

In formulas (2) and (3), x represents an integer of 0 or more; y represents an integer of 1 or more; $R^{201}$ represents a hydrogen atom, a halogen atom, a branched or unbranched C1 to C30 alkyl group, a branched or unbranched C2 to C30 alkenyl group, a branched or unbranched C2 to C30 alkynyl group, or the alkyl group in which a terminal hydrogen atom is replaced with a hydroxy or carboxy group; $R^{202}$ represents a branched or unbranched C1 to C30 alkylene group, a branched or unbranched C2 to C30 alkenylene group, or a branched or unbranched C2 to C30 alkynylene group, provided that $R^{201}$ and $R^{202}$ together may form a ring structure.
The compound of formula (1) is described below.
The use of the compound of formula (1) leads to good silica dispersion, so that the advantageous effects can be better achieved.
$R^{101}$ to $R^{103}$ each represent a branched or unbranched C1 to C12 alkyl group, a branched or unbranched C1 to C12 alkoxy group, or a group represented by $-O-(R^{111}-O)_z-R^{112}$. From the standpoint of achieving the advantageous effects well, preferably at least one of $R^{101}$ to $R^{103}$ is a group represented by $-O-(R^{111}-O)_z-R^{112}$; more preferably, two of $R^{101}$ to $R^{103}$ are groups represented by $-O-(R^{111}-O)_z-R^{112}$ while the other is a branched or unbranched C1 to C12 alkoxy group.
Examples of the branched or unbranched C1 to C12 alkyl group for $R^{101}$ to $R^{103}$ include methyl, ethyl, n-propyl, isopropyl, n-butyl, iso-butyl, sec-butyl, tert-butyl, pentyl, hexyl, heptyl, 2-ethylhexyl, octyl, and nonyl groups.
The upper limit of the carbon number is preferably 5.
Examples of the branched or unbranched C1 to C12 alkoxy group for $R^{101}$ to $R^{103}$ include methoxy, ethoxy, n-propoxy, isopropoxy, n-butoxy, iso-butoxy, sec-butoxy, tert-butoxy, pentyloxy, hexyloxy, heptyloxy, 2-ethylhexyloxy, octyloxy, and nonyloxy groups.
The upper limit of the carbon number is preferably 5.
In the group represented by $-O-(R^{111}-O)_z-R^{112}$ for $R^{101}$ to $R^{103}$, $R^{111}$ represents a branched or unbranched C1 to C30, preferably C1 to C15, more preferably C1 to C3, divalent hydrocarbon group.
Examples of the hydrocarbon group include branched or unbranched C1 to C30 alkylene groups, branched or unbranched C2 to C30 alkenylene groups, branched or unbranched C2 to C30 alkynylene groups, and C6 to C30 arylene groups. Preferred among these are branched or unbranched C1 to C30 alkylene groups.
Examples of the branched or unbranched C1 to C30 alkylene groups for $R^{111}$ include methylene, ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups.
The upper limit of the carbon number is preferably 15, more preferably 3.
Examples of the branched or unbranched C2 to C30 alkenylene groups for $R^{111}$ include vinylene, 1-propenylene, 2-propenylene, 1-butenylene, 2-butenylene, 1-pentenylene, 2-pentenylene, 1-hexenylene, 2-hexenylene, and 1-octenylene groups.

The upper limit of the carbon number is preferably 15, more preferably 3.

Examples of the branched or unbranched C2 to C30 alkynylene groups for $R^{111}$ include ethynylene, propynylene, butynylene, pentynylene, hexynylene, heptynylene, octynylene, nonynylene, decynylene, undecynylene, and dodecynylene groups.

The upper limit of the carbon number is preferably 15, more preferably 3.

Examples of the C6 to C30 arylene groups for $R^{111}$ include phenylene, tolylene, xylylene, and naphthylene groups.

The upper limit of the carbon number is preferably 15.

The symbol z represents an integer of 1 to 30. The lower limit is preferably 2, more preferably 3, still more preferably 5, while the upper limit is preferably 20, more preferably 7, still more preferably 6.

$R^{112}$ represents a branched or unbranched C1 to C30 alkyl group, a branched or unbranched C2 to C30 alkenyl group, a C6 to C30 aryl group, or a C7 to C30 aralkyl group. Among these, $R^{112}$ is preferably a branched or unbranched C1 to C30 alkyl group.

Examples of the branched or unbranched C1 to C30 alkyl group for $R^{112}$ include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

The lower limit of the carbon number is preferably 3, more preferably 10, while the upper limit of the carbon number is preferably 25, more preferably 15.

Examples of the branched or unbranched C2 to C30 alkenyl group for $R^{112}$ include vinyl, 1-propenyl, 2-propenyl, 1-butenyl, 2-butenyl, 1-pentenyl, 2-pentenyl, 1-hexenyl, 2-hexenyl, 1-octenyl, decenyl, undecenyl, dodecenyl, tridecenyl, tetradecenyl, pentadecenyl, and octadecenyl groups.

The lower limit of the carbon number is preferably 3, more preferably 10, while the upper limit of the carbon number is preferably 25, more preferably 15.

Examples of the C6 to C30 aryl group for $R^{112}$ include phenyl, tolyl, xylyl, naphthyl, and biphenyl groups.

The lower limit of the carbon number is preferably 10, while the upper limit of the carbon number is preferably 20.

Examples of the C7 to C30 aralkyl group for $R^{112}$ include benzyl and phenethyl groups.

The lower limit of the carbon number is preferably 10, while the upper limit of the carbon number is preferably 20.

Specific examples of the group represented by $-O-(R^{111}-O)_z-R^{112}$ include $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, and $-O-(C_2H_4-O)_7-C_{13}H_{27}$. Preferred among these are $-O-(C_2H_4-O)_5-C_{11}H_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$.

Examples of the branched or unbranched C1 to C6 alkylene group for $R^{104}$ include the groups mentioned for the branched or unbranched C1 to C30 alkylene groups for $R^{111}$.

The upper limit of the carbon number is preferably 5.

Examples of the compound of formula (1) include 3-mercaptopropyltrimethoxysilane, 3-mercaptopropyltriethoxysilane, 2-mercaptoethyltrimethoxysilane, 2-mercaptoethyltriethoxysilane, and a compound represented by the formula below (Si363 produced by EVONIK-DEGUSSA). The compound of the formula below is suitable. These compounds may be used alone or in combinations of two or more.

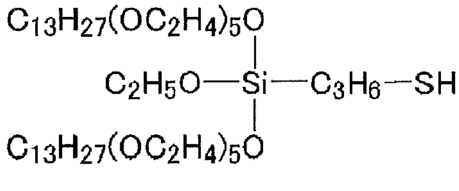

The compound containing linking units A and B represented by the formulas (2) and (3), respectively, is described below.

To better achieve the advantageous effects, the silane coupling agent having such a structure preferably has a linking unit A content of not lower than 30 mol%, more preferably not lower than 50 mol%, but preferably not higher than 99 mol%, more preferably not higher than 90 mol%. It also preferably has a linking unit B content of not lower than 1 mol%, more preferably not lower than 5 mol%, still more preferably not lower than 10 mol%, but preferably not higher than 70 mol%, more preferably not higher than 65 mol%, still more preferably not higher than 55 mol%. Moreover, the combined content of the linking units A and B is preferably not lower than 95 mol%, more preferably not lower than 98 mol%, particularly preferably 100 mol%.

The linking unit A or B content refers to the amount including the linking unit A or B that is present at the terminal of the silane coupling agent, if any. In the case where the linking unit A or B is present at the terminal of the silane

coupling agent, its form is not particularly limited as long as it forms a unit corresponding to formula (2) representing the linking unit A or formula (3) representing the linking unit B.

Examples of the halogen atom for $R^{201}$ include chlorine, bromine, and fluorine.

Examples of the branched or unbranched C1 to C30 alkyl group for $R^{201}$ include methyl, ethyl, n-propyl, isopropyl, n-butyl, iso-butyl, sec-butyl, tert-butyl, pentyl, hexyl, heptyl, 2-ethylhexyl, octyl, nonyl, and decyl groups. The carbon number of the alkyl group is preferably 1 to 12.

Examples of the branched or unbranched C2 to C30 alkenyl group for $R^{201}$ include vinyl, 1-propenyl, 2-propenyl, 1-butenyl, 2-butenyl, 1-pentenyl, 2-pentenyl, 1-hexenyl, 2-hexenyl, and 1-octenyl groups. The carbon number of the alkenyl group is preferably 2 to 12.

Examples of the branched or unbranched C2 to C30 alkynyl group for $R^{201}$ include ethynyl, propynyl, butynyl, pentynyl, hexynyl, heptynyl, octynyl, nonynyl, decynyl, undecynyl, and dodecynyl groups. The carbon number of the alkynyl group is preferably 2 to 12.

Examples of the branched or unbranched C1 to C30 alkylene group for $R^{202}$ include ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups. The carbon number of the alkylene group is preferably 1 to 12.

Examples of the branched or unbranched C2 to C30 alkenylene group for $R^{202}$ include vinylene, 1-propenylene, 2-propenylene, 1-butenylene, 2-butenylene, 1-pentenylene, 2-pentenylene, 1-hexenylene, 2-hexenylene, and 1-octenylene groups. The carbon number of the alkenylene group is preferably 2 to 12.

Examples of the branched or unbranched C2 to C30 alkynylene group for $R^{202}$ include ethynylene, propynylene, butynylene, pentynylene, hexynylene, heptynylene, octynylene, nonynylene, decynylene, undecynylene, and dodecynylene groups. The carbon number of the alkynylene group is preferably 2 to 12.

In the compound containing linking units A and B of formulas (2) and (3), the sum (x+y) of the number of repetitions of the linking unit A (x) and the number of repetitions of the linking unit B (y) is preferably in the range of 3 to 300. When the sum is within the range indicated above, the $-C_7H_{15}$ moiety of the linking unit A covers the mercaptosilane of the linking unit B, thereby making it possible to reduce a decrease in scorch time and also to ensure good reactivity to the silica and the rubber component.

Examples of the compound containing linking units A and B of formulas (2) and (3) include NXT-Z30, NXT-Z45, and NXT-Z60 all available from Momentive. These may be used alone or in combinations of two or more.

The silane coupling agent may be a commercial product of, for example, Degussa, Momentive, Shin-Etsu Silicone, Tokyo Chemical Industry Co., Ltd., AZmax. Co., or Dow Corning Toray Co., Ltd.

The amount of the silane coupling agent per 100 parts by mass of the silica is preferably 3 parts by mass or more, more preferably 5 parts by mass or more, but is preferably 20 parts by mass or less, more preferably 15 parts by mass or less. When the amount is within the range indicated above, the advantageous effects tend to be well achieved.

The ratio X/Y of the amount X (parts by mass) of the surfactant to the amount Y (parts by mass) of the silane coupling agent is preferably 0.05 to 20. When the ratio is within the range indicated above, the advantageous effects tend to be well achieved. The amounts each refer to the amount per 100 parts by mass of the rubber component.

The lower limit of X/Y is preferably 0.1, more preferably 0.2, still more preferably 0.25, while the upper limit of X/Y is preferably 10, more preferably 5, still more preferably 2, most preferably 1.

The ratio Z/(X+Y) of the amount Z (parts by mass) of the silica having a nitrogen adsorption specific surface area of 210 $m^2/g$ or more to the amount X (parts by mass) of the surfactant and the amount Y (parts by mass) of the silane coupling agent is preferably 3 to 30. When the ratio is within the range indicated above, the advantageous effects tend to be well achieved. The amounts each refer to the amount per 100 parts by mass of the rubber component.

The lower limit of Z/(X+Y) is preferably 4, more preferably 5, while the upper limit of Z/(X+Y) is preferably 20, more preferably 15, still more preferably 12, particularly preferably 10, most preferably 8.

The rubber composition preferably contains a carbon black. In this case, the advantageous effects can be suitably achieved.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area ($N_2SA$) of 70 $m^2/g$ or more, more preferably 80 $m^2/g$ or more, still more preferably 100 $m^2/g$ or more. The $N_2SA$ is also preferably 300 $m^2/g$ or less, more preferably 250 $m^2/g$ or less, still more preferably 200 $m^2/g$ or less, particularly preferably 160 $m^2/g$ or less. When the $N_2SA$ is within the range indicated above, the advantageous effects tend to be well achieved.

The nitrogen adsorption specific surface area of the carbon black is determined in accordance with JIS K 6217-2:2001.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black per 100 parts by mass of the rubber component is preferably 2 parts by mass

or more, more preferably 3 parts by mass or more, but is preferably 100 parts by mass or less, more preferably 60 parts by mass or less, still more preferably 30 parts by mass or less, particularly preferably 20 parts by mass or less, most preferably 10 parts by mass or less. When the amount is within the range indicated above, the advantageous effects tend to be well achieved.

The ratio A/Z of the amount A (parts by mass) of the carbon black to the amount Z (parts by mass) of the silica having a nitrogen adsorption specific surface area of 210 $m^2/g$ or more is preferably 0.01 to 120. When the ratio is within the range indicated above, the advantageous effects tend to be well achieved. The amounts each refers to the amount per 100 parts by mass of the rubber component.

The lower limit of A/Z is preferably 0.02, more preferably 0.03, while the upper limit of A/Z is preferably 20, more preferably 1, still more preferably 0.5, particularly preferably 0.2.

The rubber composition may contain an oil.

Examples of the oil include process oils, vegetable oils, and mixtures thereof. Examples of the process oils include paraffinic process oils, aromatic process oils, and naphthenic process oils. Examples of the vegetable oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Aromatic process oils are preferred among these.

The oil may be a commercial product of, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil per 100 parts by mass of the rubber component is preferably 5 parts by mass or more, more preferably 10 parts by mass or more, still more preferably 20 parts by mass or more, but is preferably 70 parts by mass or less, more preferably 50 parts by mass or less. When the amount is within the range indicated above, the advantageous effects tend to be well achieved.

The amount of the oil includes the amount of the oil, if present in the rubber (oil extended rubber).

The rubber composition preferably contains sulfur.

Examples of the sulfur include those usually used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component is preferably 0.5 parts by mass or more, more preferably 1 part by mass or more, but is preferably 10 parts by mass or less, more preferably 5 parts by mass or less, still more preferably 3 parts by mass or less. When the amount is within the range indicated above, the advantageous effects tend to be well achieved.

The rubber composition preferably contains a vulcanization accelerator.

Examples of the vulcanization accelerator include: thiazole vulcanization accelerators such as 2-mercaptobenzothiazole (MBT) and dibenzothiazyldisulfide (MBTS); thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-tert-butyl-2-benzothiazolyl sulfenamide (TBBS), N-cyclohexyl-2-benzothiazolyl sulfenamide (CBS), N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as 1,3-diphenylguanidine (DPG), diorthotolylguanidine, and orthotolylbiguanidine. These may be used alone or in combinations of two or more. To more suitably achieve the advantageous effects, thiazole vulcanization accelerators, sulfenamide vulcanization accelerators, and guanidine vulcanization accelerators are preferred among these. Also preferred are combinations of sulfenamide vulcanization accelerators and guanidine vulcanization accelerators or combinations of thiazole vulcanization accelerators and guanidine vulcanization accelerators.

Preferred thiazole, sulfenamide, and guanidine vulcanization accelerators are MBT and MBTS; TBBS and CBS; and DPG, respectively.

The amount of the vulcanization accelerator per 100 parts by mass of the rubber component is preferably 0.5 parts by mass or more, more preferably 1 part by mass or more, but is preferably 10 parts by mass or less, more preferably 7 parts by mass or less. When the amount is within the range indicated above, the advantageous effects tend to be well achieved.

The rubber composition may contain a resin.

Any resin generally used in the tire industry may be used, and examples include rosin-based resins, coumarone indene resins, $\alpha$-methylstyrene-based resins, terpene-based resins, p-t-butylphenol acetylene resins, acrylic resins, C5 resins, and C9 resins. Examples of such commercially available resins include products of Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries,

Ltd., Taoka Chemical Co., Ltd., and Toagosei Co., Ltd. These may be used alone or in combinations of two or more.

From the standpoint of the balance of the properties, the amount of the resin per 100 parts by mass of the rubber component is preferably 0.3 parts by mass or more, more preferably 0.5 parts by mass or more, but is preferably 100 parts by mass or less, more preferably 50 parts by mass or less.

The rubber composition may contain an antioxidant.

Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)propionate]methane. These may be used alone or in combinations of two or more. Among these, p-phenylenediamine antioxidants and quinoline antioxidants are preferred, with p-phenylenediamine antioxidants being more preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component is preferably 0.5 parts by mass or more, more preferably 1 part or more, but is preferably 10 parts by mass or less, more preferably 5 parts by mass or less. When the amount is within the range indicated above, the advantageous effects tend to be well achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

From the standpoint of the balance of the properties, the amount of the wax per 100 parts by mass of the rubber component is preferably 0.3 parts by mass or more, more preferably 0.5 parts by mass or more, but is preferably 20 parts by mass or less, more preferably 10 parts by mass or less.

The rubber composition preferably contains a fatty acid.

The fatty acid may be a conventional one, such as stearic acid, oleic acid, or palmitic acid. Stearic acid is preferred because then the advantageous effects tend to be well achieved. These may be used alone or in combinations of two or more.

The fatty acid may be a commercial product of, for example, NOF Corporation, Kao Corporation, Wako Pure Chemical Industries, Ltd., or Chiba Fatty Acid Co., Ltd.

The amount of the fatty acid per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effects tend to be well achieved.

The rubber composition preferably contains zinc oxide.

The zinc oxide may be a conventional one, and examples of such commercially available zinc oxide include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the advantageous effects tend to be better achieved.

In addition to the above-mentioned components, the rubber composition may contain additives usually used in the tire industry, including, for example, organic peroxides and fillers such as magnesium sulfate. The amount of each filler per 100 parts by mass of the rubber component is preferably 0.1 parts by mass or more, but is preferably 200 parts by mass or less.

The rubber composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. The composition obtained after kneading vulcanizing agents and vulcanization accelerators is usually vulcanized by, for example, press vulcanization. The vulcanization temperature is usually 140 to 190°C, preferably 150 to 185°C.

The rubber composition has good fuel economy and thus may be used in tire components such as treads (cap treads), sidewalls, base treads, undertreads, clinches, bead apexes, breaker cushion rubbers, rubbers for carcass cord

topping, insulations, chafers, and innerliners, as well as side reinforcement layers of run-flat tires. Among these, the rubber composition is suitable for treads.

(Pneumatic tire)

The pneumatic tire of the present invention can be produced from the rubber composition by usual methods. Specifically, the unvulcanized rubber composition containing the above-mentioned components may be extruded into the shape of a tire component such as a tread and then assembled with other tire components on a tire building machine in a usual manner to build an unvulcanized tire, which may then be heated and pressurized in a vulcanizer, thereby producing a tire.

The pneumatic tire may be suitably used as, for example, a tire for passenger vehicles, large passenger vehicles, large SUVs, or trucks and buses, or as a racing tire, a studless winter tire (winter tire), a tire for two-wheeled vehicles, a run-flat tire, an aircraft tire, or a mining tire.

(Second aspect of present invention)

Next, the second aspect of the present invention will be explained, but mainly the differences from the first aspect of the invention will be described. Except where otherwise noted, the above description of the first aspect of the invention applies.

The rubber composition for tires of the second aspect of the present invention contains: a rubber component including 30% by mass or more of a styrene-butadiene rubber having a SiOR group wherein R represents a hydrogen atom or a hydrocarbon group, and having a total styrene-butadiene rubber content of 70 to 90% by mass and a polybutadiene rubber content of 10 to 30% by mass, each based on 100% by mass of the rubber component; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts.

The reason why such a rubber composition provides good silica dispersion and fuel economy is not exactly clear, but may be explained as follows.

The SiOR group in a styrene-butadiene rubber having a SiOR group (referred to as "modified SBR") may interact with the hydroxyl groups on the surface of silica. Thus, the modified SBR can reduce aggregation of silica particles to improve silica dispersion. Moreover, the above-mentioned surfactant may adsorb suitably onto the hydrophilic silica surface due to the presence of a polyoxyalkylene portion and a sulfate portion, and make the silica surface hydrophobic with the alkenyl or alkyl group at the molecular end. Thus, the surfactant can reduce aggregation of silica particles to improve silica dispersion, and can also prevent adsorption of vulcanization accelerators to silica. Moreover, a combination of the modified SBR and the surfactant can provide a synergistic improvement of silica dispersion, so that better silica dispersion and fuel economy can be obtained than with the conventional techniques. This is believed to be because the presence of the surfactant improves the affinity between the silica and the modified SBR. Moreover, this effect is particularly pronounced when the rubber composition contains a relatively large amount of fine particle silica (a silica having a nitrogen adsorption specific surface area of 210 $m^2/g$ or more in an amount of 50 parts by mass or more per 100 parts by mass of the rubber component). This is believed to be because, although fine particle silica can easily aggregate due to its strong aggregation ability, the combination of the modified SBR and the surfactant can provide a greater synergistic improvement of dispersion of the fine particle silica, so that the dispersion-improving effect can be more pronounced.

Probably for this reason, the present invention provides a rubber composition with good silica dispersion and fuel economy, even though it contains a relatively a large amount of fine particle silica (a silica having a nitrogen adsorption specific surface area of 210 $m^2/g$ or more in an amount of 50 parts by mass or more per 100 parts by mass of the rubber component).

Further, in the present invention, the total styrene-butadiene rubber content and the polybutadiene rubber content are 70 to 90% by mass, and 10 to 30% by mass, respectively, based on 100% by mass of the rubber component; in other words, the rubber component consists of rubbers which are highly compatible with each other. Thus, the effects produced by the combination of the modified SBR and the surfactant can be sufficiently achieved, and at the same time the silica disperses well even in the polybutadiene rubber phase, thereby providing good abrasion resistance.

In addition to good silica dispersion and fuel economy, the present invention also provides good processability, abrasion resistance, and grip performance.

Furthermore, the combined use of the styrene-butadiene rubber having a SiOR group wherein R represents a hydrogen atom or a hydrocarbon group, with the surfactant can synergistically improve silica dispersion and fuel economy.

The amount of the modified SBR based on 100% by mass of the rubber component is 30% by mass or more, preferably 50% by mass or more, more preferably 60% by mass or more, but is preferably 90% by mass or less, more

preferably 80% by mass or less. When the amount is within the range indicated above, the advantageous effects tend to be well achieved.

The total SBR content (the combined amount of the modified SBR and the second SBR) based on 100% by mass of the rubber component is preferably 70% by mass or more, but is preferably 90% by mass or less, more preferably 80% by mass or less. When the total SBR content is within the range indicated above, the advantageous effects tend to be well achieved.

The amount of the BR based on 100% by mass of the rubber component is preferably 10% by mass or more, more preferably 20% by mass or more, but is preferably 30% by mass or less. When the amount is within the range indicated above, the advantageous effects tend to be well achieved.

The combined amount of the SBR (the modified SBR and the second SBR) and the BR based on 100% by mass of the rubber component is preferably 80% by mass or more, more preferably 90% by mass or more, and may be 100% by mass. When the combined amount is within the range indicated above, the advantageous effects tend to be well achieved.

The amount of the surfactant per 100 parts by mass of the rubber component is preferably 0.5 parts by mass or more, more preferably 1 part by mass or more, still more preferably 2 parts by mass or more, but is preferably 30 parts by mass or less, more preferably 20 parts by mass or less, still more preferably 10 parts by mass or less, particularly preferably 8 parts by mass or less. When the amount is within the range indicated above, the advantageous effects tend to be well achieved.

The mercapto silane coupling agent is preferably a silane coupling agent having a mercapto group (-SH), more preferably a compound of formula (1) and/or a compound containing linking units A and B of formulas (2) and (3), still more preferably a compound of formula (1). In such a case, the advantageous effects can be more suitably achieved.

The amount of the silane coupling agent per 100 parts by mass of the silica is preferably 3 parts by mass or more, more preferably 5 parts by mass or more, but is preferably 20 parts by mass or less, more preferably 15 parts by mass or less, still more preferably 11 parts by mass or less. When the amount is within the range indicated above, the advantageous effects tend to be well achieved.

The ratio X/Y of the amount X (parts by mass) of the surfactant to the amount Y (parts by mass) of the silane coupling agent is preferably 0.05 to 20. When the ratio is within the range indicated above, the advantageous effects tend to be well achieved. The amounts each refer to the amount per 100 parts by mass of the rubber component.

The lower limit of X/Y is preferably 0.1, more preferably 0.2, still more preferably 0.25, while the upper limit of X/Y is preferably 10, more preferably 5, still more preferably 2, most preferably 1, even most preferably 0.8.

The ratio Z/(X+Y) of the amount Z (parts by mass) of the silica having a nitrogen adsorption specific surface area of 210 $m^2/g$ or more to the amount X (parts by mass) of the surfactant and the amount Y (parts by mass) of the silane coupling agent is preferably 3 to 30. When the ratio is within the range indicated above, the advantageous effects tend to be well achieved. The amounts each refer to the amount per 100 parts by mass of the rubber component.

The lower limit of Z/(X+Y) is preferably 4, more preferably 5, while the upper limit of Z/(X+Y) is preferably 20, more preferably 15, still more preferably 12, particularly preferably 10.

(Third aspect of present invention)

Next, the third aspect of the present invention will be explained, but mainly the differences from the first aspect of the invention will be described. Except where otherwise noted, the above description of the first aspect of the invention applies.

The rubber composition for tires of the third aspect of the present invention contains: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 70 to 130 parts by mass per 100 parts by mass of the rubber component; and at least one surfactant selected from the group consisting of polyoxyalkylene alkenyl ether sulfate salts and polyoxyalkylene alkyl ether sulfate salts.

The reason why such a rubber composition provides good silica dispersion and fuel economy is not exactly clear, but may be explained as follows.

The SiOR group in a styrene-butadiene rubber having a SiOR group (referred to as "modified SBR") may interact with the hydroxyl groups on the surface of silica. Thus, the modified SBR can reduce aggregation of silica particles to improve silica dispersion. Moreover, the above-mentioned surfactant may adsorb suitably onto the hydrophilic silica surface due to the presence of a polyoxyalkylene portion and a sulfate portion, and make the silica surface hydrophobic with the alkenyl or alkyl group at the molecular end. Thus, the surfactant can reduce aggregation of silica particles to improve silica dispersion, and can also prevent adsorption of vulcanization accelerators to silica. Moreover, a combination of the modified SBR and the surfactant can provide a synergistic improvement of silica dispersion, so that better silica dispersion and fuel economy can be obtained than with the conventional techniques. This is believed to be because the presence of the surfactant improves the affinity between the silica and the modified SBR. Moreover, this effect is

particularly pronounced when the rubber composition contains a relatively large amount of fine particle silica (a silica having a nitrogen adsorption specific surface area of 210 $m^2/g$ or more in an amount of 50 parts by mass or more per 100 parts by mass of the rubber component). This is believed to be because, although fine particle silica can easily aggregate due to its strong aggregation ability, the combination of the modified SBR and the surfactant can provide a greater synergistic improvement of dispersion of the fine particle silica, so that the dispersion-improving effect can be more pronounced.

Probably for this reason, the present invention provides a rubber composition with good silica dispersion and fuel economy, even though it contains a relatively a large amount of fine particle silica (a silica having a nitrogen adsorption specific surface area of 210 $m^2/g$ or more in an amount of 50 parts by mass or more per 100 parts by mass of the rubber component).

Further, in the present invention in which the amount of the silica having a nitrogen adsorption specific surface area of 210 $m^2/g$ or more is 70 to 130 parts by mass, the effects produced by the combination of the modified SBR and the surfactant can be more pronounced.

In addition to good silica dispersion and fuel economy, the present invention also provides good processability, abrasion resistance, and grip performance.

Furthermore, the combined use of the styrene-butadiene rubber having a SiOR group wherein R represents a hydrogen atom or a hydrocarbon group, with the surfactant can synergistically improve silica dispersion and fuel economy.

The rubber composition contains a silica having a nitrogen adsorption specific surface area of 210 $m^2/g$ or more.

Examples of the silica include dry silica (silicic acid anhydride) and wet silica (hydrous silicic acid). Wet silica is preferred because it has a large number of silanol groups. These may be used alone or in combinations of two or more.

The amount of the silica per 100 parts by mass of the rubber component is preferably 70 parts by mass or more, but is preferably 130 parts by mass or less, still more preferably 120 parts by mass or less, particularly preferably 100 parts by mass or less. When the amount is within the range indicated above, the advantageous effects tend to be well achieved.

The rubber composition preferably further contains a silane coupling agent.

Non-limiting examples of the silane coupling agent include those described for the first aspect of the present invention. Preferred among these are sulfide silane coupling agents and mercapto silane coupling agents, with sulfide silane coupling agents being more preferred, because then the advantageous effects tend to be well achieved.

The amount of the silane coupling agent per 100 parts by mass of the silica is preferably 3 parts by mass or more, more preferably 5 parts by mass or more, but is preferably 20 parts by mass or less, more preferably 15 parts by mass or less, still more preferably 11 parts by mass or less. When the amount is within the range indicated above, the advantageous effects tend to be well achieved.

The ratio Z/(X+Y) of the amount Z (parts by mass) of the silica having a nitrogen adsorption specific surface area of 210 $m^2/g$ or more to the amount X (parts by mass) of the surfactant and the amount Y (parts by mass) of the silane coupling agent is preferably 3 to 30. When the ratio is within the range indicated above, the advantageous effects tend to be well achieved. The amounts each refer to the amount per 100 parts by mass of the rubber component.

The lower limit of Z/(X+Y) is preferably 4, more preferably 5, while the upper limit of Z/(X+Y) is preferably 20, more preferably 15, still more preferably 12, particularly preferably 10.

(Fourth aspect of present invention)

Next, the fourth aspect of the present invention will be explained, but mainly the differences from the first aspect of the invention will be described. Except where otherwise noted, the above description of the first aspect of the invention applies.

The rubber composition for tires of the fourth aspect of the present invention contains: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; and at least one surfactant selected from the group consisting of polyoxyalkylene alkenyl ether sulfate salts and polyoxyalkylene alkyl ether sulfate salts, wherein the silica and the surfactant are simultaneously kneaded with the rubber.

The reason why such a rubber composition provides good silica dispersion and fuel economy is not exactly clear, but may be explained as follows.

The SiOR group in a styrene-butadiene rubber having a SiOR group (referred to as "modified SBR") may interact with the hydroxyl groups on the surface of silica. Thus, the modified SBR can reduce aggregation of silica particles to improve silica dispersion. Moreover, the above-mentioned surfactant may adsorb suitably onto the hydrophilic silica surface due to the presence of a polyoxyalkylene portion and a sulfate portion, and make the silica surface hydrophobic with the alkenyl or alkyl group at the molecular end. Thus, the surfactant can reduce aggregation of silica particles to improve silica dispersion, and can also prevent adsorption of vulcanization accelerators to silica. Moreover, a combination of the modified SBR and the surfactant can provide a synergistic improvement of silica dispersion, so that better silica dispersion and fuel economy can be obtained than with the conventional techniques. This is believed to be because the presence of the surfactant improves the affinity between the silica and the modified SBR. Moreover, this effect is particularly pronounced when the rubber composition contains a relatively large amount of fine particle silica (a silica having a nitrogen adsorption specific surface area of 210 $m^2/g$ or more in an amount of 50 parts by mass or more per 100 parts by mass of the rubber component). This is believed to be because, although fine particle silica can easily aggregate due to its strong aggregation ability, the combination of the modified SBR and the surfactant can provide a greater synergistic improvement of dispersion of the fine particle silica, so that the dispersion-improving effect can be more pronounced.

Probably for this reason, the present invention provides a rubber composition with good silica dispersion and fuel economy, even though it contains a relatively a large amount of fine particle silica (a silica having a nitrogen adsorption specific surface area of 210 $m^2/g$ or more in an amount of 50 parts by mass or more per 100 parts by mass of the rubber component).

Further, in the present invention in which the silica and the surfactant are simultaneously kneaded with the rubber, the effects produced by the combination of the modified SBR and the surfactant can be more pronounced.

In addition to good silica dispersion and fuel economy, the present invention also provides good processability, abrasion resistance, and grip performance.

Furthermore, the combined use of the styrene-butadiene rubber having a SiOR group wherein R represents a hydrogen atom or a hydrocarbon group, with the surfactant can synergistically improve silica dispersion and fuel economy.

The rubber composition of the fourth aspect of the present invention is prepared by a method in which the silica and the surfactant are simultaneously kneaded with the rubber. The expression "simultaneously kneaded with the rubber" means that the silica and the surfactant are introduced and kneaded in a kneading machine in the same kneading step. For example, both components may be introduced and kneaded in a kneading machine in a base kneading process. In the case of a base kneading process consisting of multiple steps, both components may be introduced and kneaded in a kneading machine in one of the multiple steps.

Of the total amount of the silica incorporated into the rubber composition, preferably 80% by mass or more, more preferably 90% by mass or more, still more preferably 95% by mass or more, most preferably 100% by mass is preferably kneaded with the rubber simultaneously with the surfactant. In such a case, the advantageous effects can be better achieved.

Similarly, of the total amount of the surfactant incorporated into the rubber composition, preferably 80% by mass or more, more preferably 90% by mass or more, still more preferably 95% by mass or more, most preferably 100% by mass is preferably kneaded with the rubber simultaneously with the silica. In such a case, the advantageous effects can be better achieved.

(Fifth aspect of present invention)

Next, the fifth aspect of the present invention will be explained, but mainly the differences from the first aspect of the invention will be described. Except where otherwise noted, the above description of the first aspect of the invention applies.

The rubber composition for tires of the fifth aspect of the present invention contains: a rubber component including 30% by mass or more of a styrene-butadiene rubber having a SiOR group wherein R represents a hydrogen atom or a hydrocarbon group; a silica having a nitrogen adsorption specific surface area of 210 $m^2/g$ or more in an amount of 50 parts by mass or more per 100 parts by mass of the rubber component; a carbon black in an amount of 2 parts by mass or more per 100 parts by mass of the rubber component; and at least one surfactant selected from the group consisting of polyoxyalkylene alkenyl ether sulfate salts and polyoxyalkylene alkyl ether sulfate salts.

The reason why such a rubber composition provides good silica dispersion and fuel economy is not exactly clear, but may be explained as follows.

The SiOR group in a styrene-butadiene rubber having a SiOR group (referred to as "modified SBR") may interact with the hydroxyl groups on the surface of silica. Thus, the modified SBR can reduce aggregation of silica particles to improve silica dispersion. Moreover, the above-mentioned surfactant may adsorb suitably onto the hydrophilic silica surface due to the presence of a polyoxyalkylene portion and a sulfate portion, and make the silica surface hydrophobic with the alkenyl or alkyl group at the molecular end. Thus, the surfactant can reduce aggregation of silica particles to improve silica dispersion, and can also prevent adsorption of vulcanization accelerators to silica. Moreover, a combination of the modified SBR and the surfactant can provide a synergistic improvement of silica dispersion, so that better silica dispersion and fuel economy can be obtained than with the conventional techniques. This is believed to be because the presence of the surfactant improves the affinity between the silica and the modified SBR. Moreover, this effect is particularly pronounced when the rubber composition contains a relatively large amount of fine particle silica (a silica having a nitrogen adsorption specific surface area of 210 $m^2/g$ or more in an amount of 50 parts by mass or more per

100 parts by mass of the rubber component). This is believed to be because, although fine particle silica can easily aggregate due to its strong aggregation ability, the combination of the modified SBR and the surfactant can provide a greater synergistic improvement of dispersion of the fine particle silica, so that the dispersion-improving effect can be more pronounced.

Probably for this reason, the present invention provides a rubber composition with good silica dispersion and fuel economy, even though it contains a relatively a large amount of fine particle silica (a silica having a nitrogen adsorption specific surface area of 210 $m^2$/g or more in an amount of 50 parts by mass or more per 100 parts by mass of the rubber component).

Further, in the present invention in which a predetermined amount of a carbon black is incorporated, the effects produced by the combination of the modified SBR and the surfactant can be more pronounced.

In addition to good silica dispersion and fuel economy, the present invention also provides good processability, abrasion resistance, and grip performance.

Furthermore, the combined use of the styrene-butadiene rubber having a SiOR group wherein R represents a hydrogen atom or a hydrocarbon group, with the surfactant can synergistically improve silica dispersion and fuel economy.

The amount of the silica per 100 parts by mass of the rubber component is 50 parts by mass or more, preferably 60 parts by mass or more, more preferably 70 parts by mass or more, but is preferably 150 parts by mass or less, more preferably 130 parts by mass or less, still more preferably 120 parts by mass or less. When the amount is within the range indicated above, the advantageous effects tend to be well achieved.

The rubber composition may contain an antioxidant.

Non-limiting examples of the antioxidant include those described above. Preferred among there are p-phenylenediamine antioxidants and quinoline antioxidants, with p-phenylenediamine antioxidants being more preferred. Also preferred are combinations of p-phenylenediamine antioxidants and quinoline antioxidants.

## EXAMPLES

The present invention is specifically described with reference to, but not limited to, examples.

(First aspect of present invention)

(Production Example 1)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, butadiene is added, followed by polymerization for five minutes. Subsequently, 3-dimethylaminopropyltrimethoxysilane is added as a modifier to cause a reaction for 15 minutes. After completion of the polymerization, 2,6-ditert-butyl-p-cresol is added. Then, the solvent is removed by steam stripping. The product is dried on hot rolls adjusted at 110°C to obtain a modified styrene-butadiene rubber (modified SBR).

(Production Example 2)

An unmodified styrene-butadiene rubber (unmodified SBR) is prepared as in Production Example 1, except that no modifier is added.

The SBRs obtained in the production examples are evaluated as follows.

(Weight average molecular weight (Mw))

The Mw is determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

(Styrene content)

The styrene content of the SBRs is determined by $H^1$-NMR analysis.

(Vinyl content)

The vinyl content of the SBRs is measured by infrared absorption spectrometry.

The chemicals used in the examples and comparative examples are listed below.

Modified SBR: modified SBR (the SBR prepared in Production Example 1, styrene content: 21% by mass, vinyl content: 55% by mass, Mw: 850,000)
Unmodified SBR: unmodified SBR (the SBR prepared in Production Example 2, styrene content: 21% by mass, vinyl content: 55% by mass, Mw: 850,000)
BR: BR150B (cis content: 97% by mass) available from Ube Industries, Ltd.
Silica 1: ULTRASIL VN3 ($N_2SA$: 180 $m^2/g$) available from Evonik Degussa
Silica 2: 9000GR ($N_2SA$: 230 $m^2/g$) available from Evonik Degussa
Silica 3: Nipsil VN3 ($N_2SA$: 270 $m^2/g$) available from Tosoh Corporation
Carbon black: SHOBLACK N134 ($N_2SA$: 148 $m^2/g$) available from Cabot Japan K.K.
Surfactant 1: LATEMUL PD-104 (ammonium polyoxyalkylene alkenyl ether sulfate) available from Kao Corporation
Surfactant 2: EMAL E-27C (sodium polyoxyethylene lauryl ether sulfate, carbon number of alkyl group: 12) available from Kao Corporation
Silane coupling agent: NXT-Z45 (compound containing linking units A and B (linking unit A: 55 mol%, linking unit B: 45 mol%)) available from Momentive
Oil: Diana Process AH-24 (aromatic process oil) available from Idemitsu Kosan Co., Ltd.
Antioxidant: Antigene 6C (antioxidant, N-(1,3-dimethylbutyl)-N'-phenyl-p-phenylenediamine) available from Sumitomo Chemical Co., Ltd.
Wax: Ozoace 0355 available from Nippon Seiro Co., Ltd.
Stearic acid: TSUBAKI available from NOF Corporation
Zinc oxide: zinc oxide #2 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

(Examples and Comparative Examples)

The chemicals other than the sulfur and vulcanization accelerators according to the formulation shown in Table 1 are kneaded at a preset temperature of 150°C for five minutes using a 1.7 L Banbury mixer (Kobe Steel, Ltd.) to give a kneaded mixture. Then, the sulfur and vulcanization accelerators are added to the kneaded mixture, and they are kneaded at 100°C for five minutes using an open roll mill to give an unvulcanized rubber composition. The unvulcanized rubber composition is press-vulcanized at 170°C for 20 minutes to give a vulcanized rubber composition (rubber vulcanizate sheet).
The unvulcanized and vulcanized rubber compositions prepared as above are evaluated as described below and found to have the same or similar values as shown in Table 1.

(Mooney viscosity (processability))

The Mooney viscosity is determined in accordance with JIS K 6300-1 "Rubber, unvulcanized - Physical property - Part 1: Determination of Mooney viscosity and prevulcanization characteristics with Mooney viscometer" using a Mooney viscosity tester as follows. After preheating for one minute to 130°C, a small rotor is rotated at this temperature, and after a lapse of four minutes the Mooney viscosity ($ML_{1+4}$/130°C) of the unvulcanized rubber compositions is measured. The measured Mooney viscosity of each formulation example is expressed as an index using the equation below, with Comparative Example 1 set equal to 100. A higher index indicates a lower viscosity and better processability.

$$\text{(Mooney viscosity index)} = \text{(Mooney viscosity of Comparative Example 1)}/\text{(Mooney viscosity of each formulation example)} \times 100$$

(Payne Effect (Silica dispersion))

The strain dependence of the storage modulus of the vulcanized rubber compositions is measured at a measurement temperature of 110°C (one minute preheating), a frequency of 6 cpm, and an amplitude of 0.28 to 10% using RPA2000 tester available from Alpha Technologies. Then, the storage modulus at a strain of 0.56% is calculated. The results are expressed as an index (dispersion index), with Comparative Example 1 set equal to 100. A higher index indicates a smaller amount of poorly dispersed filler agglomerates and better filler dispersion. In the present examples, since the silica accounts for a large proportion of the filler, the Payne effect index is mainly indicative of silica dispersion.

(Fuel economy)

The loss tangent (tan δ) of the rubber vulcanizate sheets is measured using a viscoelastic spectrometer (Iwamoto Seisakusho Co., Ltd.) at a temperature of 50°C, an initial strain of 10%, a dynamic strain of 2%, and a frequency of 10 Hz. The tan δ values are used to calculate a fuel economy index using the equation below, with Comparative Example 1 set equal to 100. A higher fuel economy index indicates better fuel economy.

$$(\text{Fuel economy index}) = (\tan\delta \text{ of Comparative Example 1}) / (\tan\delta \text{ of each formulation example}) \times 100$$

(Abrasion resistance)

The volume loss of each vulcanized rubber composition is measured with a LAT tester (laboratory abrasion and skid tester) at a load of 40 N, a speed of 20 km/h, and a slip angle of 5 degrees. The volume losses are used to calculate a LAT abrasion index using the equation below, with Comparative Example 1 set equal to 100. A higher index indicates better abrasion resistance.

$$(\text{Abrasion resistance index}) = (\text{Volume loss of Comparative Example 1}) / (\text{Volume loss of each formulation example}) \times 100$$

[Table 1]

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| Amount (parts by mass) | Modified SBR | 100 | | | | 100 | 40 | 40 | 40 | 40 |
| | Unmodified SBR | | 70 | 100 | 100 | | 30 | 30 | 30 | 30 |
| | BR | | 30 | | | | 30 | 30 | 30 | 30 |
| | Silica 1 ($N_2SA$: 180 $m^2/g$) | | 60 | | | | | | | |
| | Silica 2 ($N_2SA$: 230 $m^2/g$) | 60 | | 60 | 60 | 60 | 60 | | 110 | 60 |
| | Silica 3 ($N_2SA$: 270 $m^2/g$) | | | | | | | 60 | | |
| | Carbon black | 5 | 5 | 5 | 5 | 5 | 5 | 5 | 5 | 5 |
| | Surfactant 1 | | | 5 | | 5 | 5 | 5 | 5 | |
| | Surfactant 2 | | | | | | | | | 5 |
| | Silane coupling agent | 6.4 | 6.4 | 6.4 | 6.4 | 6.4 | 6.4 | 6.4 | 11.7 | 6.4 |
| | Oil | 35 | 35 | 35 | 35 | 35 | 35 | 35 | 35 | 35 |
| | Antioxidant | 2 | 2 | 2 | 2 | 2 | 2 | 2 | 2 | 2 |
| | Wax | 2 | 2 | 2 | 2 | 2 | 2 | 2 | 2 | 2 |
| | Stearic acid | 1 | 1 | 1 | 1 | 1 | 1 | 1 | 1 | 1 |
| | Zinc oxide | 2 | 2 | 2 | 2 | 2 | 2 | 2 | 2 | 2 |
| | Sulfur | 2 | 2 | 2 | 2 | 2 | 2 | 2 | 2 | 2 |
| | Vulcanization accelerator 1 | 1.5 | 1.5 | 1.5 | 1.5 | 1.5 | 1.5 | 1.5 | 1.5 | 1.5 |
| | Vulcanization accelerator 2 | 0.5 | 0.5 | 0.5 | 0.5 | 0.5 | 0.5 | 0.5 | 0.5 | 0.5 |
| Amount X of surfactant / Amount Y of silane coupling agent | | 0 | 0 | 0.78 | 0 | 0.78 | 0.78 | 0.78 | 0.43 | 0.78 |
| Amount Z of silica/ (Amount X of surfactant + Amount Y of silane coupling agent) | | | | | | 5.26 | 5.26 | 5.26 | 6.59 | 5.26 |
| Amount A of carbon black / Amount Z of silica | | | | | | 0.08 | 0.08 | 0.08 | 0.05 | 0.08 |
| Evaluation result | Processability (unvulcanized viscosity) | 100 | 110 | 105 | 105 | 110 | 120 | 115 | 105 | 120 |
| | Dispersion index (⊿G* (Payne effect)) | 100 | 85 | 105 | 95 | 112 | 108 | 108 | 105 | 108 |
| | Fuel economy (tan δ) | 100 | 90 | 90 | 85 | 109 | 105 | 105 | 105 | 105 |
| | Abrasion resistance | 100 | 105 | 95 | 95 | 108 | 110 | 123 | 125 | 110 |

(Second aspect of present invention)

Next, the examples of the second aspect of the present invention will be explained, but mainly the differences from those of the first aspect of the invention will be described. Except where otherwise noted, the above description of the first aspect of the invention applies.

(Production Example 3)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, butadiene is added, followed by polymerization for five minutes. Subsequently, 3-dimethylaminopropyltriethoxysilane is added as a modifier to cause a reaction for 15 minutes. After completion of the polymerization, 2,6-ditert-butyl-p-cresol is added. Then, the solvent is removed by steam stripping. The product is dried on hot rolls adjusted at 110°C to obtain a modified styrene-butadiene rubber (modified SBR).

(Production Example 4)

An unmodified styrene-butadiene rubber (unmodified SBR) is prepared as in Production Example 3, except that no modifier is added.

The chemicals used in the examples and comparative examples are listed below.

Modified SBR: modified SBR (the SBR prepared in Production Example 3, styrene content: 21% by mass, vinyl content: 55% by mass, Mw: 850,000)
Unmodified SBR: unmodified SBR (the SBR prepared in Production Example 4, styrene content: 21% by mass, vinyl content: 55% by mass, Mw: 850,000)
BR: BR150B (cis content: 97% by mass) available from Ube Industries, Ltd.
Silica 1: 9000GR ($N_2SA$: 230 $m^2/g$) available from Evonik Degussa
Silica 2: Nipsil VN3 ($N_2SA$: 270 $m^2/g$) available from Tosoh Corporation
Carbon black: SHOBLACK N220 ($N_2SA$: 114 $m^2/g$) available from Cabot Japan K.K.
Surfactant 1: LATEMUL PD-104 (ammonium polyoxyalkylene alkenyl ether sulfate) available from Kao Corporation
Surfactant 2: EMAL E-27C (sodium polyoxyethylene lauryl ether sulfate, carbon number of alkyl group: 12) available from Kao Corporation
Silane coupling agent: Si363 available from Evonik Degussa
Oil: Diana Process AH-24 (aromatic process oil) available from Idemitsu Kosan Co., Ltd.
Antioxidant: Antigene 6C (antioxidant, N-(1,3-dimethylbutyl)-N'-phenyl-p-phenylenediamine) available from Sumitomo Chemical Co., Ltd.
Wax: Ozoace 0355 available from Nippon Seiro Co., Ltd.
Stearic acid: TSUBAKI available from NOF Corporation
Zinc oxide: zinc oxide #2 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

(Examples and Comparative Examples)

The chemicals other than the sulfur and vulcanization accelerators according to the formulation shown in Table 2 are kneaded at a preset temperature of 150°C for five minutes using a 1.7 L Banbury mixer (Kobe Steel, Ltd.) to give a kneaded mixture. Then, the sulfur and vulcanization accelerators are added to the kneaded mixture, and they are kneaded at 100°C for five minutes using an open roll mill to give an unvulcanized rubber composition. The unvulcanized rubber composition is press-vulcanized at 170°C for 20 minutes to give a vulcanized rubber composition (rubber vulcanizate sheet).

The unvulcanized rubber compositions and vulcanized rubber compositions prepared as above are evaluated as described earlier, and found to have the same or similar values as shown in Table 2.

[Table 2]

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Amount (parts by mass) | Modified SBR | 70 | 90 | 70 | 70 | 70 | 70 | 90 | | |
| | Unmodified SBR | | | | | | | | 70 | 70 |
| | BR | 30 | 10 | 30 | 30 | 30 | 30 | 10 | 30 | 30 |
| | Carbon black | 5 | 5 | 5 | 5 | 5 | 5 | 5 | 5 | 5 |
| | Silica 1 ($N_2SA$: 230$m^2$/g) | 90 | 90 | | 70 | 90 | 90 | 90 | 90 | 90 |
| | Silica 2 ($N_2SA$: 270$m^2$/g) | | | 90 | | | | | | |
| | Silane coupling agent | 7.2 | 7.2 | 7.2 | 5.6 | 7.2 | 7.2 | 7.2 | 7.2 | 7.2 |
| | Surfactant 1 | 2 | 2 | 2 | 2 | | | | 2 | |
| | Surfactant 2 | | | | | 2 | | | | |
| | Antioxidant | 3 | 3 | 3 | 3 | 3 | 3 | 3 | 3 | 3 |
| | Wax | 2 | 2 | 2 | 2 | 2 | 2 | 2 | 2 | 2 |
| | Stearic acid | 2 | 2 | 2 | 2 | 2 | 2 | 2 | 2 | 2 |
| | Zinc oxide | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 |
| | Vulcanization accelerator 2 | 2 | 2 | 2 | 2 | 2 | 2 | 2 | 2 | 2 |
| Amount X of surfactant / Amount Y of silane coupling agent | | 0.28 | 0.28 | 0.28 | 0.36 | 0.28 | 0 | 0 | 0.28 | 0 |
| Amount Z of silica/ (Amount X of surfactant + Amount Y of silane coupling agent) | | 9.78 | 9.78 | 9.78 | 9.21 | 9.78 | | | | |
| Amount A of carbon black / Amount Z of silica | | 0.06 | 0.06 | 0.06 | 0.07 | 0.06 | | | | |
| Evaluation result | Processability (unvulcanized viscosity) | 112 | 115 | 122 | 118 | 111 | 100 | 104 | 101 | 101 |
| | Dispersion index (⊿G* (Payne effect)) | 120 | 121 | 120 | 122 | 118 | 100 | 99 | 99 | 85 |
| | Fuel economy | 118 | 110 | 108 | 115 | 118 | 100 | 82 | 80 | 75 |
| | Abrasion resistance | 115 | 101 | 117 | 113 | 114 | 100 | 85 | 95 | 98 |

(Third aspect of present invention)

Next, the examples of the third aspect of the present invention will be explained, but mainly the differences from those of the first aspect of the invention will be described. Except where otherwise noted, the above description of the first aspect of the invention applies.

(Production Example 5)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, butadiene is added, followed by polymerization for five minutes. Subsequently, 3-diethylaminopropyltriethoxysilane is added as a modifier to cause a reaction for 15 minutes. After completion of the polymerization, 2,6-di-tert-butylp-cresol is added. Then, the solvent is removed by steam stripping. The product is dried on hot rolls adjusted at 110°C to obtain a modified styrene-butadiene rubber (modified SBR).

(Production Example 6)

An unmodified styrene-butadiene rubber (unmodified SBR) is prepared as in Production Example 5, except that no modifier is added.
The chemicals used in the examples and comparative examples are listed below.

Modified SBR: modified SBR (the SBR prepared in Production Example 5, styrene content: 21% by mass, vinyl content: 55% by mass, Mw: 850,000)
Unmodified SBR: unmodified SBR (the SBR prepared in Production Example 6, styrene content: 21% by mass, vinyl content: 55% by mass, Mw: 850,000)
BR: BR150B (cis content: 97% by mass) available from Ube Industries, Ltd.
Silica 1: 9000GR ($N_2SA$: 230 $m^2/g$) available from Evonik Degussa
Silica 2: Nipsil VN3 ($N_2SA$: 270 $m^2/g$) available from Tosoh Corporation
Carbon black: SHOBLACK N220 ($N_2SA$: 114 $m^2/g$) available from Cabot Japan K.K.
Surfactant 1: LATEMUL PD-104 (ammonium polyoxyalkylene alkenyl ether sulfate) available from Kao Corporation
Surfactant 2: EMAL E-27C (sodium polyoxyethylene lauryl ether sulfate, carbon number of alkyl group: 12) available from Kao Corporation
Silane coupling agent: silane coupling agent Si266 (bis(3-triethoxysilylpropyldisulfide)) available from Evonik Degussa
Oil: Diana Process AH-24 (aromatic process oil) available from Idemitsu Kosan Co., Ltd.
Antioxidant: Antigene 6C (antioxidant, N-(1,3-dimethylbutyl)-N'-phenyl-p-phenylenediamine) available from Sumitomo Chemical Co., Ltd.
Wax: Ozoace 0355 available from Nippon Seiro Co., Ltd.
Stearic acid: TSUBAKI available from NOF Corporation
Zinc oxide: zinc oxide #2 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

(Examples and Comparative Examples)

The chemicals other than the sulfur and vulcanization accelerators according to the formulation shown in Table 3 are kneaded at a preset temperature of 150°C for five minutes using a 1.7 L Banbury mixer (Kobe Steel, Ltd.) to give a kneaded mixture. Then, the sulfur and vulcanization accelerators are added to the kneaded mixture, and they are kneaded at 100°C for five minutes using an open roll mill to give an unvulcanized rubber composition. The unvulcanized rubber composition is press-vulcanized at 170°C for 20 minutes to give a vulcanized rubber composition (rubber vulcanizate sheet).
The vulcanized rubber compositions prepared as above are evaluated as described earlier and below, and found to have the same or similar values as shown in Table 3.

(Grip performance)

The loss tangent (tan δ) of the rubber vulcanizate sheets is measured using a viscoelastic spectrometer (Iwamoto Seisakusho Co., Ltd.) at a temperature of 0°C, an initial strain of 10%, a dynamic strain of 2%, and a frequency of 10 Hz. A grip performance index of each example is calculated relative to the tan δ of Comparative Example 1 (=100). A higher grip performance index indicates better grip performance.

[Table 3]

| | | Comparative Example 1 | Comparative Example 2 | Comparative Example 3 | Comparative Example 4 | Example 1 | Example 2 | Example 3 | Example 4 |
|---|---|---|---|---|---|---|---|---|---|
| Amount (parts by mass) | Modified SBR | 100 | 100 | | | 100 | 100 | 100 | 100 |
| | Unmodified SBR | | | 100 | 100 | | | | |
| | Carbon black | 7 | 7 | 7 | 7 | 7 | 7 | 7 | 7 |
| | Silica 1 ($N_2SA$: $230 m^2/g$) | 90 | 140 | 90 | 90 | 90 | | 120 | 90 |
| | Silica 2 ($N_2SA$: $270 m^2/g$) | | | | | | 90 | | |
| | Surfactant 1 | | | 5 | | 5 | 5 | 5 | |
| | Surfactant 2 | | | | | | | | 5 |
| | Silane coupling agent | 7.2 | 11.2 | 7.2 | 7.2 | 7.2 | 7.2 | 9.6 | 7.2 |
| | Oil | 35 | 35 | 35 | 35 | 35 | 35 | 35 | 35 |
| | Antioxidant | 2 | 2 | 2 | 2 | 2 | 2 | 2 | 2 |
| | Wax | 2 | 2 | 2 | 2 | 2 | 2 | 2 | 2 |
| | Stearic acid | 1 | 1 | 1 | 1 | 1 | 1 | 1 | 1 |
| | Zinc oxide | 2 | 2 | 2 | 2 | 2 | 2 | 2 | 2 |
| | Sulfur | 2 | 2 | 2 | 2 | 2 | 2 | 2 | 2 |
| | Vulcanization accelerator 1 | 1.5 | 1.5 | 1.5 | 1.5 | 1.5 | 1.5 | 1.5 | 1.5 |
| | Vulcanization accelerator 2 | 0.5 | 0.5 | 0.5 | 0.5 | 0.5 | 0.5 | 0.5 | 0.5 |
| Amount X of surfactant / Amount Y of silane coupling agent | | 0 | 0 | 0.69 | 0 | 0.69 | 0.69 | 0.52 | 0.69 |
| Amount Z of silica/ (Amount X of surfactant + Amount Y of silane coupling agent) | | | | | | 7.38 | 7.38 | 8.22 | 7.38 |
| Amount A of carbon black / Amount Z of silica | | | | | | 0.08 | 0.08 | 0.06 | 0.08 |
| Evaluation result | Dispersion index (⊿G* (Payne effect)) | 100 | 90 | 100 | 90 | 112 | 108 | 107 | 108 |
| | Fuel economy | 100 | 80 | 90 | 85 | 110 | 108 | 105 | 108 |
| | Grip performance | 100 | 120 | 110 | 115 | 100 | 110 | 110 | 115 |

(Fourth aspect of present invention)

Next, the examples of the fourth aspect of the present invention will be explained, but mainly the differences from those of the first aspect of the invention will be described. Except where otherwise noted, the above description of the first aspect of the invention applies.

(Production Example 7)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, butadiene is added, followed by polymerization for five minutes. Subsequently, 3-diethylaminopropyltrimethoxysilane is added as a modifier to cause a reaction for 15 minutes. After completion of the polymerization, 2,6-ditert-butyl-p-cresol is added. Then, the solvent is removed by steam stripping. The product is dried on hot rolls adjusted at 110°C to obtain a modified styrene-butadiene rubber (modified SBR).

(Production Example 8)

An unmodified styrene-butadiene rubber (unmodified SBR) is prepared as in Production Example 7, except that no modifier is added.

The chemicals used in the examples and comparative examples are listed below.

Modified SBR: modified SBR (the SBR prepared in Production Example 7, styrene content: 21% by mass, vinyl content: 55% by mass, Mw: 850,000)
Unmodified SBR: unmodified SBR (the SBR prepared in Production Example 8, styrene content: 21% by mass, vinyl content: 55% by mass, Mw: 850,000)
BR: BR150B (cis content: 97% by mass) available from Ube Industries, Ltd.
Silica 1: ULTRASIL VN3 ($N_2SA$: 180 $m^2/g$) available from Evonik Degussa
Silica 2: 9000GR ($N_2SA$: 230 $m^2/g$) available from Evonik Degussa
Silica 3: Nipsil VN3 ($N_2SA$: 270 $m^2/g$) available from Tosoh Corporation
Carbon black: SHOBLACK N134 ($N_2SA$: 148 $m^2/g$) available from Cabot Japan K.K.
Surfactant 1: LATEMUL PD-104 (ammonium polyoxyalkylene alkenyl ether sulfate) available from Kao Corporation
Surfactant 2: EMAL E-27C (sodium polyoxyethylene lauryl ether sulfate, carbon number of alkyl group: 12) available from Kao Corporation
Silane coupling agent: NXT-Z45 (compound containing linking units A and B (linking unit A: 55 mol%, linking unit B: 45 mol%)) available from Momentive
Oil: Diana Process AH-24 (aromatic process oil) available from Idemitsu Kosan Co., Ltd.
Antioxidant: Antigene 6C (antioxidant, N-(1,3-dimethylbutyl)-N'-phenyl-p-phenylenediamine) available from Sumitomo Chemical Co., Ltd.
Wax: Ozoace 0355 available from Nippon Seiro Co., Ltd.
Stearic acid: TSUBAKI available from NOF Corporation
Zinc oxide: zinc oxide #2 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

(Examples and Comparative Examples)

The chemicals other than the sulfur and vulcanization accelerators according to the formulation shown in Table 4 are kneaded at a preset temperature of 150°C for five minutes using a 1.7 L Banbury mixer (Kobe Steel, Ltd.) to give a kneaded mixture. Then, the sulfur and vulcanization accelerators are added to the kneaded mixture, and they are kneaded at 100°C for five minutes using an open roll mill to give an unvulcanized rubber composition. The unvulcanized rubber composition is press-vulcanized at 170°C for 20 minutes to give a vulcanized rubber composition (rubber vulcanizate sheet). Here, the entire amounts of the silica and surfactant used are simultaneously introduced into the kneading machine.

The unvulcanized rubber compositions and vulcanized rubber compositions prepared as above are evaluated

as described earlier, and found to have the same or similar values as shown in Table 4.

[Table 4]

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| Amount (parts by mass) | Modified SBR | 100 | | | | 100 | 40 | 40 | 40 | 40 |
| | Unmodified SBR | | 70 | 100 | 100 | | 30 | 30 | 30 | 30 |
| | BR | | 30 | | | | 30 | 30 | 30 | 30 |
| | Silica 1 ($N_2SA$: 180$m^2$/g) | | 60 | | | | | | | |
| | Silica 2 ($N_2SA$: 230$m^2$/g) | 60 | | 60 | 60 | 60 | 60 | | 110 | 60 |
| | Silica 3 ($N_2SA$: 270$m^2$/g) | | | | | | | 60 | | |
| | Carbon black | 5 | 5 | 5 | 5 | 5 | 5 | 5 | 5 | 5 |
| | Surfactant 1 | | | 5 | | 5 | 5 | 5 | 5 | |
| | Surfactant 2 | | | | | | | | | 5 |
| | Silane coupling agent | 6.4 | 6.4 | 6.4 | 6.4 | 6.4 | 6.4 | 6.4 | 11.7 | 6.4 |
| | Oil | 35 | 35 | 35 | 35 | 35 | 35 | 35 | 35 | 35 |
| | Antioxidant | 2 | 2 | 2 | 2 | 2 | 2 | 2 | 2 | 2 |
| | Wax | 2 | 2 | 2 | 2 | 2 | 2 | 2 | 2 | 2 |
| | Stearic acid | 1 | 1 | 1 | 1 | 1 | 1 | 1 | 1 | 1 |
| | Zinc oxide | 2 | 2 | 2 | 2 | 2 | 2 | 2 | 2 | 2 |
| | Sulfur | 2 | 2 | 2 | 2 | 2 | 2 | 2 | 2 | 2 |
| | Vulcanization accelerator 1 | 1.5 | 1.5 | 1.5 | 1.5 | 1.5 | 1.5 | 1.5 | 1.5 | 1.5 |
| | Vulcanization accelerator 2 | 0.5 | 0.5 | 0.5 | 0.5 | 0.5 | 0.5 | 0.5 | 0.5 | 0.5 |
| Amount X of surfactant / Amount Y of silane coupling agent | | 0 | 0 | 0.78 | 0 | 0.78 | 0.78 | 0.78 | 0.43 | 0.78 |
| Amount Z of silica/ (Amount X of surfactant + Amount Y of silane coupling agent) | | | | | | 5.26 | 5.26 | 5.26 | 6.59 | 5.26 |
| Amount A of carbon black / Amount Z of silica | | | | | | 0.08 | 0.08 | 0.08 | 0.05 | 0.08 |
| Timing of introduction of surfactant | | | | Simultaneously with silica | | Simultaneously with silica | Simultaneously with silica | Simultaneously with silica | Simultaneously with silica | Simultaneously with silica |
| Evaluation result | Processability (unvulcanized viscosity) | 100 | 110 | 105 | 105 | 110 | 120 | 115 | 105 | 120 |
| | Dispersion index (⊿G* (Payne effect)) | 100 | 85 | 105 | 95 | 112 | 108 | 108 | 105 | 108 |
| | Fuel economy (tan δ) | 100 | 90 | 90 | 85 | 109 | 105 | 105 | 105 | 105 |
| | Abrasion resistance | 100 | 105 | 95 | 95 | 108 | 110 | 123 | 125 | 110 |

(Fifth aspect of present invention)

Next, the examples of the fifth aspect of the present invention will be explained, but mainly the differences from those of the first aspect of the invention will be described. Except where otherwise noted, the above description of the first aspect of the invention applies.

(Production Example 9)

A nitrogen-purged autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, butadiene is added, followed by polymerization for five minutes. Subsequently, 3-ethylmethylaminopropyltrimethoxysilane is added as a modifier to cause a reaction for 15 minutes. After completion of the polymerization, 2,6-ditert-butyl-p-cresol is added. Then, the solvent is removed by steam stripping. The product is dried on hot rolls adjusted at 110°C to obtain a modified styrene-butadiene rubber (modified SBR).

(Production Example 10)

An unmodified styrene-butadiene rubber (unmodified SBR) is prepared as in Production Example 9, except that no modifier is added.

The chemicals used in the examples and comparative examples are listed below.

Modified SBR: modified SBR (the SBR prepared in Production Example 9, styrene content: 21% by mass, vinyl content: 55% by mass, Mw: 850,000)
Unmodified SBR: unmodified SBR (the SBR prepared in Production Example 10, styrene content: 21% by mass, vinyl content: 55% by mass, Mw: 850,000)
BR: BR150B (cis content: 97% by mass) available from Ube Industries, Ltd.
Silica 1: 9000GR ($N_2SA$: 230 $m^2/g$) available from Evonik Degussa
Silica 2: Nipsil VN3 ($N_2SA$: 270 $m^2/g$) available from Tosoh Corporation
Carbon black: SHOBLACK N134 ($N_2SA$: 148 $m^2/g$) available from Cabot Japan K.K.
Surfactant 1: LATEMUL PD-104 (ammonium polyoxyalkylene alkenyl ether sulfate) available from Kao Corporation
Surfactant 2: EMAL E-27C (sodium polyoxyethylene lauryl ether sulfate, carbon number of alkyl group: 12) available from Kao Corporation
Silane coupling agent: NXT-Z45 (compound containing linking units A and B (linking unit A: 55 mol%, linking unit B: 45 mol%)) available from Momentive
Oil: Diana Process AH-24 (aromatic process oil) available from Idemitsu Kosan Co., Ltd.
Antioxidant 1: Antigene 6C (antioxidant, N-(1,3-dimethylbutyl)-N'-phenyl-p-phenylenediamine) available from Sumitomo Chemical Co., Ltd.
Antioxidant 2: TMQ (2,2,4-trimethyl-1,2-dihydroquinoline polymer) available from Ouchi Shinko Chemical Industrial Co., Ltd.
Wax: Ozoace 0355 available from Nippon Seiro Co., Ltd.
Stearic acid: TSUBAKI available from NOF Corporation
Zinc oxide: zinc oxide #2 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER D (1,3-diphenylguanidine) available from Ouchi Shinko Chemical Industrial Co., Ltd.
Vulcanization accelerator 2: NOCCELER M-P(M) (2-mercaptobenzothiazole) available from Ouchi Shinko Chemical Industrial Co., Ltd.
Vulcanization accelerator 3: NOCCELER MBTS (dibenzothiazyldisulfide) available from Ouchi Shinko Chemical Industrial Co., Ltd.

(Examples and Comparative Examples)

The chemicals other than the sulfur and vulcanization accelerators according to the formulation shown in Table 5 are kneaded at a preset temperature of 150°C for five minutes using a 1.7 L Banbury mixer (Kobe Steel, Ltd.) to give a kneaded mixture. Then, the sulfur and vulcanization accelerators are added to the kneaded mixture, and they are kneaded at 100°C for five minutes using an open roll mill to give an unvulcanized rubber composition. The unvulcanized rubber composition is press-vulcanized at 170°C for 20 minutes to give a vulcanized rubber composition (rubber vulcanizate sheet).

The unvulcanized rubber compositions and vulcanized rubber compositions prepared as above are evaluated as described earlier and below, and found to have the same or similar values as shown in Table 5.

(Grip performance)

The loss tangent (tan δ) of the rubber vulcanizate sheets is measured using a viscoelastic spectrometer (Iwamoto Seisakusho Co., Ltd.) at a temperature of 0°C, an initial strain of 10%, a dynamic strain of 2%, and a frequency of 10 Hz. A grip performance index of each example is calculated relative to the tan δ of Comparative Example 1 (=100). A higher grip performance index indicates better grip performance.

[Table 5]

| | | Comparative Example 1 | Comparative Example 2 | Comparative Example 3 | Example 1 | Example 2 | Example 3 | Example 4 |
|---|---|---|---|---|---|---|---|---|
| Amount (parts by mass) | Unmodified SBR | 80 | 80 | | | | | |
| | Modified SBR | | | 80 | 80 | 80 | 80 | 80 |
| | BR | 20 | 20 | 20 | 20 | 20 | 20 | 20 |
| | Silica 1 ($N_2SA$: 230$m^2$/g) | 80 | 80 | 80 | 80 | | 120 | 80 |
| | Silica 2 ($N_2SA$: 270$m^2$/g) | | | | | 80 | | |
| | Carbon black | 5 | 5 | 5 | 5 | 5 | 5 | 5 |
| | Silane coupling agent | 8 | 8 | 8 | 8 | 8 | 12 | 8 |
| | Surfactant 1 | | 8 | | 8 | 8 | 8 | |
| | Surfactant 2 | | | | | | | 8 |
| | Stearic acid | 1 | 1 | 1 | 1 | 1 | 1 | 1 |
| | Wax | 2 | 2 | 2 | 2 | 2 | 2 | 2 |
| | Antioxidant 1 | 4 | 4 | 4 | 4 | 4 | 4 | 4 |
| | Antioxidant 2 | 0.3 | 0.3 | 0.3 | 0.3 | 0.3 | 0.3 | 0.3 |
| | Zinc oxide | 2.5 | 2.5 | 2.5 | 2.5 | 2.5 | 2.5 | 2.5 |
| | Vulcanization accelerator 1 | 0.8 | 0.8 | 0.8 | 0.8 | 0.8 | 0.8 | 0.8 |
| | Vulcanization accelerator 2 | 0.8 | 0.8 | 0.8 | 0.8 | 0.8 | 0.8 | 0.8 |
| | Vulcanization accelerator 3 | 0.9 | 0.9 | 0.9 | 0.9 | 0.9 | 0.9 | 0.9 |
| | Sulfur | 1.5 | 1.5 | 1.5 | 1.5 | 1.5 | 1.5 | 1.5 |
| Amount X of surfactant / Amount Y of silane coupling agent | | 0 | 1 | 0 | 1 | 1 | 0.67 | 1 |
| Amount Z of silica/ (Amount X of surfactant + Amount Y of silane coupling agent) | | | | | 5 | 5 | 6 | 5 |
| Amount A of carbon black / Amount Z of silica | | | | | 0.06 | 0.06 | 0.04 | 0.06 |
| Evaluation result | Processability (unvulcanized viscosity) | 100 | 140 | 80 | 135 | 155 | 120 | 130 |
| | Dispersion index (∆G* (Payne effect)) | 100 | 105 | 110 | 125 | 130 | 125 | 120 |
| | Fuel economy (tan δ) | 100 | 105 | 110 | 125 | 120 | 130 | 120 |
| | Grip performance | 100 | 95 | 105 | 118 | 110 | 115 | 113 |

## Claims

**1.** A rubber composition for tires, comprising:

a rubber component comprising 30% by mass or more of a styrene-butadiene rubber having a SiOR group wherein R represents a hydrogen atom or a hydrocarbon group;
a silica having a nitrogen adsorption specific surface area of 210 $m^2$/g or more in an amount of 50 parts by mass or more per 100 parts by mass of the rubber component; and
at least one surfactant selected from the group consisting of polyoxyalkylene alkenyl ether sulfate salts and polyoxyalkylene alkyl ether sulfate salts.

**2.** The rubber composition for tires according to claim 1,
wherein a ratio X/Y of an amount X (parts by mass) of the surfactant to an amount Y (parts by mass) of a silane coupling agent is 0.05 to 20.

**3.** The rubber composition for tires according to claim 1 or 2,
wherein a ratio Z/(X+Y) of an amount Z (parts by mass) of the silica to an amount X (parts by mass) of the surfactant and an amount Y (parts by mass) of a silane coupling agent is 3 to 30.

4. The rubber composition for tires according to any one of claims 1 to 3, wherein the surfactant is a polyoxyalkylene alkenyl ether sulfate salt.

5. The rubber composition for tires according to any one of claims 1 to 4, wherein the rubber component has a total styrene-butadiene rubber content of 70 to 90% by mass and a polybutadiene rubber content of 10 to 30% by mass, each based on 100% by mass of the rubber component.

6. The rubber composition for tires according to any one of claims 1 to 4, wherein the rubber composition comprises the silica having a nitrogen adsorption specific surface area of 210 $m^2/g$ or more in an amount of 70 to 130 parts by mass per 100 parts by mass of the rubber component.

7. A rubber composition for tires according to any one of claims 1 to 4, wherein the silica and the surfactant are simultaneously kneaded with the rubber.

8. The rubber composition for tires according to any one of claims 1 to 4, wherein the rubber composition comprises a carbon black in an amount of 2 parts by mass or more per 100 parts by mass of the rubber component.

9. The rubber composition for tires according to claim 8, wherein a ratio A/Z of an amount A (parts by mass) of the carbon black to an amount Z (parts by mass) of the silica is 0.01 to 120.

10. A pneumatic tire, comprising a tire component formed from the rubber composition according to any one of claims 1 to 9.

**Patentansprüche**

1. Kautschukzusammensetzung für Reifen, welche umfasst:

   eine Kautschukkomponente, die 30 Massenprozent oder mehr eines Styrol-Butadien-Kautschuks umfasst, der eine SiOR-Gruppe aufweist, wobei R ein Wasserstoffatom oder eine Kohlenwasserstoffgruppe darstellt;
   ein Siliciumdioxid, das eine spezifische Stickstoffadsorptionsoberfläche von 210 $m^2/g$ oder mehr aufweist, in einer Menge von 50 Massenteilen oder mehr pro 100 Massenteile der Kautschukkomponente; und
   mindestens ein Tensid, das aus der Gruppe bestehend aus Polyoxyalkylen-Alkenyl-Ether-Sulfatsalzen und Polyoxyalkylen-Alkyl-Ether-Sulfatsalzen ausgewählt ist.

2. Kautschukzusammensetzung für Reifen nach Anspruch 1, wobei ein Verhältnis X/Y einer Menge X (Massenteile) des Tensids zu einer Menge Y (Massenteile) eines Silankopplungsmittels 0,05 bis 20 beträgt.

3. Kautschukzusammensetzung für Reifen nach Anspruch 1 oder 2, wobei ein Verhältnis Z/(X+Y) einer Menge Z (Massenteile) des Siliciumdioxids zu einer Menge X (Massenteile) des Tensids und einer Menge Y (Massenteile) des Silankopplungsmittels 3 bis 30 beträgt.

4. Kautschukzusammensetzung für Reifen nach einem der Ansprüche 1 bis 3, wobei das Tensid ein Polyoxyalkylen-Alkenyl-Ether-Sulfatsalz ist.

5. Kautschukzusammensetzung für Reifen nach einem der Ansprüche 1 bis 4, wobei die Kautschukkomponente einen gesamten Styrol-Butadien-Kautschuk-Gehalt von 70 bis 90 Massenprozent und einen Polybutadien-Kautschuk-Gehalt von 10 bis 30 Massenprozent aufweist, jeweils bezogen auf 100 Massenprozent der Kautschukkomponente.

6. Kautschukzusammensetzung für Reifen nach einem der Ansprüche 1 bis 4, wobei die Kautschukzusammensetzung das Siliciumdioxid, das eine spezifische Stickstoffadsorptionsoberfläche von 210 $m^2/g$ oder mehr aufweist, in einer Menge von 70 bis 130 Massenteilen pro 100 Massenteile der Kautschukkomponente umfasst.

7. Kautschukzusammensetzung für Reifen nach einem der Ansprüche 1 bis 4, wobei das Siliciumdioxid und das Tensid zeitgleich mit dem Kautschuk verknetet werden.

8. Kautschukzusammensetzung für Reifen nach einem der Ansprüche 1 bis 4, wobei die Kautschukzusammensetzung einen Ruß in einer Menge von 2 Massenteilen oder mehr pro 100 Massenteile der Kautschukkomponente umfasst.

9. Kautschukzusammensetzung für Reifen nach Anspruch 8, wobei ein Verhältnis A/Z einer Menge A (Massenteile) des Rußes zu einer Menge Z (Massenteile) des Siliciumdioxids 0,01 bis 120 beträgt.

10. Luftreifen, welcher eine mit der Kautschukzusammensetzung nach einem der Ansprüche 1 bis 9 gebildete Reifenkomponente umfasst.

## Revendications

1. Composition de caoutchouc pour pneumatiques, comprenant :

   un composant de caoutchouc comprenant 30 % en masse ou plus d'un caoutchouc styrène-butadiène ayant un groupe SiOR R représentant un atome d'hydrogène ou un groupe hydrocarbure ;
   une silice ayant une surface spécifique d'adsorption d'azote de 210 $m^2/g$ ou plus en une quantité de 50 parties en masse ou plus par 100 parties en masse du composant de caoutchouc ; et
   au moins un tensioactif choisi dans le groupe constitué par les sels de sulfate de polyoxyalkylène alcényl éther et les sels de sulfate de polyoxyalkylène alkyl éther.

2. Composition de caoutchouc pour pneumatiques selon la revendication 1, dans laquelle un rapport X/Y d'une quantité X (parties en masse) du tensioactif à une quantité Y (parties en masse) d'un agent de couplage silane est de 0,05 à 20.

3. Composition de caoutchouc pour pneumatiques selon la revendication 1 ou 2, dans laquelle un rapport Z/(X+Y) d'une quantité Z (parties en masse) de la silice à une quantité X (parties en masse) du tensioactif et une quantité Y (parties en masse) d'un agent de couplage silane est de 3 à 30.

4. Composition de caoutchouc pour pneumatiques selon l'une quelconque des revendications 1 à 3, dans laquelle le tensioactif est un sel de sulfate de polyoxyalkylène alcényl éther.

5. Composition de caoutchouc pour pneumatiques selon l'une quelconque des revendications 1 à 4, dans laquelle le composant de caoutchouc a une teneur en caoutchouc de styrène-butadiène totale de 70 à 90 % et une teneur en caoutchouc de polybutadiène de 10 à 30 % en masse, chacune basée sur 100 % en masse du composant de caoutchouc.

6. Composition de caoutchouc pour pneumatiques selon l'une quelconque des revendications 1 à 4, dans laquelle la composition de caoutchouc comprend la silice ayant une surface spécifique d'adsorption d'azote de 210 $m^2/g$ ou plus en une quantité de 70 à 130 parties en masse par 100 parties en masse du composant de caoutchouc.

7. Composition de caoutchouc pour pneumatiques selon l'une quelconque des revendications 1 à 4, dans laquelle la silice et le tensioactif sont pétris simultanément avec le caoutchouc.

8. Composition de caoutchouc pour pneumatiques selon l'une quelconque des revendications 1 à 4, dans laquelle la composition de caoutchouc comprend un noir de charbon en une quantité de 2 parties en masse ou plus par 100 parties en masse du composant de caoutchouc.

9. Composition de caoutchouc pour pneumatiques selon l'une quelconque des revendications 1 à 8, dans laquelle un rapport A/Z d'une quantité A (parties en masse) du noir de charbon à une quantité Z (parties en masse) de la silice est de 0,01 à 120.

10. Pneu, comprenant un composant de pneumatique formé de la composition de caoutchouc selon l'une quelconque

des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007177221 A